# EUROPEAN PATENT APPLICATION

(11) **EP 4 444 013 A1**
(43) Date of publication of application: **09.10.2024**
(21) Application number: 21966434.9
(22) Date of filing: 03.12.2021
(51) Int. Cl.: H04W 74/08

(54) **TERMINAL, RADIO COMMUNICATION METHOD, AND BASE STATION**

(71) Applicant: NTT DOCOMO, INC., Tokyo 100-6150 (JP)
(72) Inventor: HARADA, Hiroki, Tokyo 100-6150 (JP); OKANO, Mayuko, Tokyo 100-6150 (JP); KUMAGAI, Shinya, Tokyo 100-6150 (JP); NAGATA, Satoshi, Tokyo 100-6150 (JP)
(74) Representative: Hoffmann Eitle
(86) International application number: PCT/JP2021/044482
(87) International publication number: WO 2023/100353

(57) **Abstract**

A terminal according to an aspect of the present disclosure includes: a receiving section that receives configuration information of a random access channel (RACH) associated with a Public Land Mobile Network (PLMN) ID, the configuration information being included in a system information block (SIB); and a control section that controls, based on the configuration information of the RACH, a random access procedure associated with the PLMN ID. An aspect of the present disclosure allows operation of communication to be flexibly performed between operators.

## Description

### Technical Field

The present disclosure relates to a terminal, a radio communication method, and a base station in next-generation mobile communication systems.

### Background Art

In a Universal Mobile Telecommunications System (UMTS) network, the specifications of Long-Term Evolution (LTE) have been drafted for the purpose of further increasing high speed data rates, providing lower latency and so on (see Non-Patent Literature 1). In addition, for the purpose of further high capacity, advancement and the like of the LTE (Third Generation Partnership Project (3GPP) Release (Rel.) 8 and Rel. 9), the specifications of LTE-Advanced (3GPP Rel. 10 to Rel. 14) have been drafted.

Successor systems of LTE (for example, also referred to as "5th generation mobile communication system (5G)," "5G+ (plus)," "6th generation mobile communication system (6G)," "New Radio (NR)," "3GPP Rel. 15 (or later versions)," and so on) are also under study.

### Citation List

### Non-Patent Literature

Non-Patent Literature 1: 3GPP TS 36.300 V8.12.0 "Evolved Universal Terrestrial Radio Access (E-UTRA) and Evolved Universal Terrestrial Radio Access Network (E-UTRAN); Overall description; Stage 2 (Release 8)," April, 2010

### Summary of Invention

### Technical Problem

For future radio communication systems (for example, Rel. 18 or later versions), for the purpose of higher efficiency in utilization of frequency bands (existing frequency band and new high frequency band), resource sharing is under study.

However, a configuration for a specific UE is not able to be changed between a plurality of operators in some cases. In such cases, operation of communication may not be flexibly performed for each of the operators, causing communication quality enhancement to be suppressed.

In view of this, an object of the present disclosure is to provide a terminal, a radio communication method, and a base station that allow operation of communication to be flexibly performed between operators. Solution to Problem

A terminal according to an aspect of the present disclosure includes: a receiving section that receives configuration information of a random access channel (RACH) associated with a Public Land Mobile Network (PLMN) ID, the configuration information being included in a system information block (SIB); and a control section that controls, based on the configuration information of the RACH, a random access procedure associated with the PLMN ID.

### Advantageous Effects of Invention

An aspect of the present disclosure allows operation of communication to be flexibly performed between operators.

### Brief Description of Drawings

[FIG. 1] FIGS. 1A to 1D are each a diagram to show an example of network sharing.
[FIG. 2] FIGS. 2A and 2B are each a diagram to show an example of association related to PLMN IDs according to a first embodiment.
[FIG. 3] FIGS. 3A and 3B are each a diagram to show an example of association related to PLMN IDs according to a second embodiment.
[FIG. 4] FIGS. 4A and 4B are each a diagram to show an example of association related to PLMN IDs according to a third embodiment.
[FIG. 5] FIG. 5 is a diagram to show an example of association related to PLMN IDs according to a fourth embodiment.
[FIG. 6] FIG. 6 is a diagram to show an example of association related to PLMN IDs according to a fifth embodiment.
[FIG. 7] FIG. 7 is a diagram to show an example of a schematic structure of a radio communication system according to one embodiment.
[FIG. 8] FIG. 8 is a diagram to show an example of a structure of a base station according to one embodiment.
[FIG. 9] FIG. 9 is a diagram to show an example of a structure of a user terminal according to one embodiment.
[FIG. 10] FIG. 10 is a diagram to show an example of a hardware structure of the base station and the user terminal according to one embodiment.
[FIG. 11] FIG. 11 is a diagram to show an example of a vehicle according to one embodiment.

### Description of Embodiments

### (Resource Sharing)

For future radio communication systems (for example, Rel. 18 or later versions), for the purpose of higher efficiency in utilization of frequency bands (existing frequency band and new high frequency band), resource sharing is under study.

In the resource sharing, it is possible for a plurality of operators to share a radio access network (RAN), split the network (NW, for example, base station) investment cost for the respective operators, and install a large number of base stations.

For example, a plurality of operators share an antenna site (a piece of land/steel tower or the like), so that the plurality of operators can split the station placing cost.

A plurality of operators share a distributed node (for example, Distributed Unit (DU))/central node (for example, Central Unit (CU)) (for example, share a hardware base), so that the plurality of operators can split the apparatus cost.

A plurality of operators share a frequency/antenna unit (for example, Radio Unit (RU)), which can enhance efficiency in resource utilization, such as that a resource not used by an operator is made available for another operator, for example.

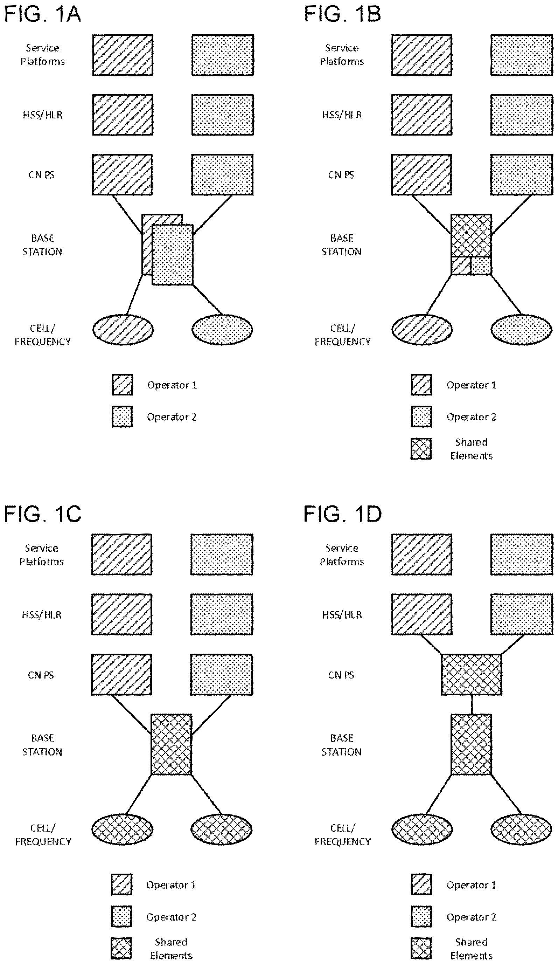

FIGS. 1A to 1D are each a diagram to show an example of network sharing.

FIG. 1A shows an example of site sharing. As shown in FIG. 1A, in the site sharing, a plurality of operators share an antenna site. On the other hand, a service platform, an HSS (Home Subscriber Server)/HLR (Home Location Register), core network (CN) packet switching (PS), a base station, and a cell/frequency are independent for each of the plurality of operators.

FIG. 1B shows an example of an MORAN (Multi Operator RAN). As shown in FIG. 1B, in the MORAN, a plurality of operators share a part of a base station (for example, hardware of the base station), in addition to an antenna site. On the other hand, a service platform, an HSS/HLR, CN PS, another part of the base station (for example, software of the base station), and a cell/frequency are independent for each of the plurality of operators.

FIG. 1C shows an example of an MOCN (Multi Operator Core Network). As shown in FIG. 1C, in the MOCN, a plurality of operators share a base station and a cell/frequency. On the other hand, a service platform, an HSS/HLR, and CN PS are independent for each of the plurality of operators.

FIG. 1D shows an example of a GWCN (Gateway Core Network). As shown in FIG. 1D, in the GWCN, a plurality of operators share CN PS, a base station, and a cell/frequency. On the other hand, a service platform and an HSS/HLR are independent for each of the plurality of operators.

In the MOCN/GWCN, the plurality of operators share the cell, so that it is desirable for a configuration to be able to be changed for each of the operators (for example, for each ID (Public Land Mobile Network ID (PLMN ID)) related to a PLMN).

For example, in an existing specification, whether to accept initial access to a cell, a tracking area code, a specific cell ID in a PLMN, and the like are able to be configured for each PLMN ID.

On the other hand, for a terminal (user terminal, User Equipment (UE)) in an RRC connected state, an operator-specific configuration is able to be configured as an RRC configuration, depending on a PLMN ID of the terminal. Specifically, in the resource sharing, in order for a part of a time resource of a shared cell to be available only for a terminal of a specific operator, terminals of the other operators are able to be configured not to use the part of the time resource.

However, in an existing specification, many of configurations (for example, broadcast information and the like) for a specific UE (for example, a UE at the time of initial access/in idle mode) are not provided for each of the operators (for example, PLMN IDs), so that such configurations are not able to be changed between the plurality of operators. For example, a parameter (for example, ServingCellConfigCommonSIB) which is in system information block 1 (SIB1) and used for configuration of a random access channel (RACH) resource or the like is not provided for each of the PLMN IDs, so that a RACH resource for the UE is not able to be configured/changed for each of the operators.

As described above, unless such configurations for the specific UE are able to be changed between the plurality of operators, operation of communication may not be flexibly performed for each of the operators, causing communication quality enhancement to be suppressed.

In view of this, the inventors of the present invention came up with the idea of a method of flexibly applying/configuring an operation policy/parameter between operators, for efficient station placing/frequency utilization by resource sharing.

Embodiments according to the present disclosure will be described in detail with reference to the drawings as follows. The radio communication methods according to respective embodiments may each be employed individually, or may be employed in combination.

In the present disclosure, "A/B" and "at least one of A and B" may be interchangeably interpreted. In the present disclosure, "A/B/C" may mean "at least one of A, B, and C."

In the present disclosure, activate, deactivate, indicate, select, configure, update, determine, and the like may be interchangeably interpreted. In the present disclosure, "support," "control," "controllable," "operate," "operable," and the like may be interchangeably interpreted.

In the present disclosure, radio resource control (RRC), an RRC parameter, an RRC message, a higher layer parameter, an information element (IE), a configuration, and the like may be interchangeably interpreted. In the present disclosure, a Medium Access Control control element (MAC Control Element (CE)), an update command, an activation/deactivation command, and the like may be interchangeably interpreted.

In the present disclosure, the higher layer signaling may be, for example, any one or combinations of Radio Resource Control (RRC) signaling, Medium Access Control (MAC) signaling, broadcast information, and the like.

In the present disclosure, the MAC signaling may use, for example, a MAC control element (MAC CE), a MAC Protocol Data Unit (PDU), or the like. The broadcast information may be, for example, a master information block (MIB), a system information block (SIB), minimum system information (Remaining Minimum System Information (RMSI)), other system information (OSI), or the like.

In the present disclosure, the physical layer signaling may be, for example, downlink control information (DCI), uplink control information (UCI), or the like.

In the present disclosure, an index, an identifier (ID), an indicator, a resource ID, and the like may be interchangeably interpreted. In the present disclosure, a sequence, a list, a set, a group, a cluster, a subset, and the like may be interchangeably interpreted.

In the present disclosure, a specific ID, an ID related to a Public Land Mobile Network (PLMN), a PLMN ID, a PLMN identifier, a PLMN Identity, PLMN identifier information, PLMN Identity information, PLMN ID information, information for identifying an operator, an ID for identifying an operator, an ID for each operator, a group ID, a PLMN group ID, and the like may be interchangeably interpreted.

In the present disclosure, a PLMN, an operator, an operator policy, a configuration for each operator, a configuration per operator, and the like may be interchangeably interpreted.

### (Radio Communication Method)

Hereinafter, in the present disclosure, description is given by taking a PLMN ID as an example of a specific ID, but the name of the specific ID is not limited to this.

In the present disclosure, an SIB used for initial access, SIB1, a first SIB, and a specific SIB may be interchangeably interpreted.

### <First Embodiment>

Separate (independent) frequency/time resource configurations for respective specific IDs (for example, PLMN IDs) may be supported.

A UE may receive information related to a frequency/time resource configured separately for each of the specific IDs.

The frequency/time resource may be, for example, a frequency resource to be configured for the UE at the time of initial access. The frequency/time resource may be an initial DL/UL bandwidth part (BWP).

The information related to such a specific frequency/time resource may be included in configuration information of a serving cell (for example, ServingCellConfigCommonSIB) included in broadcast information (for example, system information (for example, SIB/SIB1)). The information related to the specific frequency/time resource may be included in at least one of DL configuration (for example, downlinkConfigCommon/DownlinkConfigCommonSIB), UL configuration (for example, uplinkConfigCommon/UplinkConfigCommonSIB), and supplementary UL (supplementaryUplink/UplinkConfigCommonSIB) that are included in the configuration information of the serving cell (for example, ServingCellConfigCommonSIB) included in the system information.

The information related to the specific frequency/time resource may be, for example, at least one of information related to an initial DL BWP (for example, initialDownlinkBWP/BWP-DownlinkCommon) and information related to an initial UL BWP (for example, initialUplinkBWP/BWP-UplinkCommon) .

The information related to the specific frequency/time resource may be associated with a specific ID (for example, PLMN ID).

For example, the configuration information of the serving cell (for example, ServingCellConfigCommonSIB) included in the system information (for example, SIB/SIB1) may include information related to one or a plurality of specific IDs (for example, PLMN IDs).

In the present disclosure, information related to a plurality of specific IDs may be information indicating a list of specific IDs.

For example, the information related to one or a plurality of specific IDs (for example, PLMN IDs) may be included in at least one of the DL configuration (for example, downlinkConfigCommon/DownlinkConfigCommonSIB), the UL configuration (for example, uplinkConfigCommon/UplinkConfigCommonSIB), and the supplementary UL (supplementaryUplink/UplinkConfigCommonSIB) that are included in the configuration information of the serving cell (for example, ServingCellConfigCommonSIB) included in the system information.

The UE may determine, based on the specific IDs (for example, PLMN IDs) included in the SIB/SIB1, a specific frequency resource configuration for each of the specific IDs.

The number (maximum number, for example, one) of frequency resources (for example, BWPs) configurable per specific ID may be defined in a specification. The upper limit (for example, maxPLMN) of the number (total number) of frequency resources (for example, BWPs) for different specific IDs may be defined in a specification.

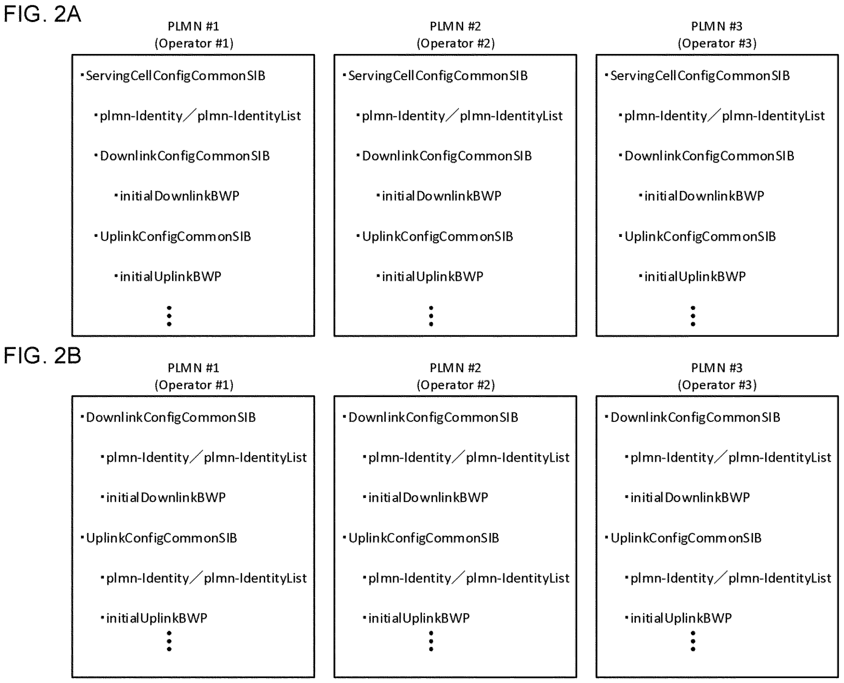

FIG. 2A is a diagram to show an example of association related to PLMN IDs according to a first embodiment. In the example shown in FIG. 2A, Operator #1 with the PLMN ID being #1, Operator #2 with the PLMN ID being #2, and Operator #3 with the PLMN ID being #3 are defined. Note that, in the present disclosure, a value of a PLMN ID and the number of PLMN IDs, and an operator number and the number of operators are each only an example, which are not limited to any example shown in each drawing.

In the example shown in FIG. 2A, information related to a PLMN ID (for example, plmn-Identity/plmn-IdentityList) is included in ServingCellConfigCommonSIB. In other words, ServingCellConfigCommonSIB is defined for each PLMN ID (each operator). Specifically, DownlinkConfigCommonSIB and UplinkConfigCommonSIB included in ServingCellConfigCommonSIB, initialDownlinkBWP included in DownlinkConfigCommonSIB, and initialUplinkBWP included in UplinkConfigCommonSIB are defined for each PLMN ID (each operator).

FIG. 2B is a diagram to show another example of the association related to PLMN IDs according to the first embodiment. In the example shown in FIG. 2B, correspondence relationship between the PLMN IDs and the operators is similar to that in FIG. 2A.

In the example shown in FIG. 2B, information related to a PLMN ID (for example, plmn-Identity/plmn-IdentityList) is included in DownlinkConfigCommonSIB and in UplinkConfigCommonSIB. In other words, DownlinkConfigCommonSIB and UplinkConfigCommonSIB are defined for each PLMN ID (each operator). Specifically, initialDownlinkBWP included in DownlinkConfigCommonSIB and initialUplinkBWP included in UplinkConfigCommonSIB are defined for each PLMN ID (each operator).

Note that, in a configuration as shown in FIGS. 2A and 2B, a certain parameter may be configured separately for each PLMN ID and another parameter may be configured commonly for a plurality of PLMN IDs.

For example, initialUplinkBWP may be configured for each PLMN ID and initialDownlinkBWP may be configured commonly for a plurality of PLMN IDs.

For example, initialDownlinkBWP may be configured for each PLMN ID and initialUplinkBWP may be configured commonly for a plurality of PLMN IDs.

With respect to at least one specific ID (for example, PLMN ID), configuration of an SSB different from an SSB detected for reception of an SIB/SIB1 may be supported. With respect to at least one specific ID (for example, PLMN ID), a UE may receive an SSB different from an SSB detected for reception of an SIB/SIB1.

The configuration information of the serving cell (for example, ServingCellConfigCommonSIB) included in the system information (for example, SIB/SIB1) may include information related to an SSB. The information related to the SSB may be associated with a specific ID (for example, PLMN ID).

The information related to the SSB may be at least one of information related to a frequency position of the SSB (for example, absoluteFrequencySSB), information related to a subcarrier spacing of the SSB (for example, ssbSubcarrierSpacing), information related to an SSB index (information related to an SSB index that the transmission is assumed by the UE, for example, ssb-PositionsInBurst), and information related to a periodicity of the SSB (for example, ssb-periodicityServingCell).

Association of the information related to the SSB with a specific ID (for example, PLMN ID) may be made in a parameter of a specific frequency resource. The parameter of the specific frequency resource may be a parameter of an initial DL BWP (for example, initialDownlinkBWP/BWP-DownlinkCommon).

A UE may assume that an SSB associated with a certain specific ID is included in an initial DL BWP of the specific ID. A case may be supported in which an SSB associated with a certain specific ID is not included in an initial DL BWP of the specific ID.

A UE may assume that only an SSB associated with a specific ID (for example, PLMN ID) for the UE is an SSB of a serving cell and monitor the SSB.

A UE may assume that both an SSB associated with a specific ID (for example, PLMN ID) for the UE and an SSB detected for reception of system information are SSBs of a serving cell and monitor the SSBs.

A UE may use, for determination of rate match, an SSB associated with an ID different from a specific ID (for example, PLMN ID) for the UE.

According to the first embodiment described above, a frequency resource (for example, initial DL/UL BWP) can be configured separately for each specific ID (for example, PLMN ID).

### <Second Embodiment>

Separate (independent) frequency/time resource configurations for respective specific IDs (for example, PLMN IDs) may be supported.

A UE may receive information related to a frequency/time resource configured separately for each of the specific IDs.

The frequency/time resource may be, for example, a time resource to be configured for the UE at the time of initial access. The frequency/time resource may be a UL/DL configuration in time division duplex (TDD).

The information related to such a specific frequency/time resource may be included in configuration information of a serving cell (for example, ServingCellConfigCommonSIB) included in broadcast information (for example, system information (for example, SIB/SIB1)). The information related to the specific frequency/time resource may be a UL/DL configuration in TDD (for example, tdd-UL-DL-ConfigurationCommon/TDD-UL-DL-ConfigCommon) .

The information related to the specific frequency/time resource may be associated with a specific ID (for example, PLMN ID).

For example, the configuration information of the serving cell (for example, ServingCellConfigCommonSIB) included in the system information (for example, SIB/SIB1) may include information related to one or a plurality of specific IDs (for example, PLMN IDs).

For example, the UL/DL configuration in TDD (for example, tdd-UL-DL-ConfigurationCommon/TDD-UL-DL-ConfigCommon) included in the configuration information of the serving cell (for example, ServingCellConfigCommonSIB) included in the system information may include the information related to one or a plurality of specific IDs (for example, PLMN IDs).

The UE may determine, based on the specific IDs (for example, PLMN IDs) included in the SIB/SIB1, a specific time resource configuration for each of the specific IDs.

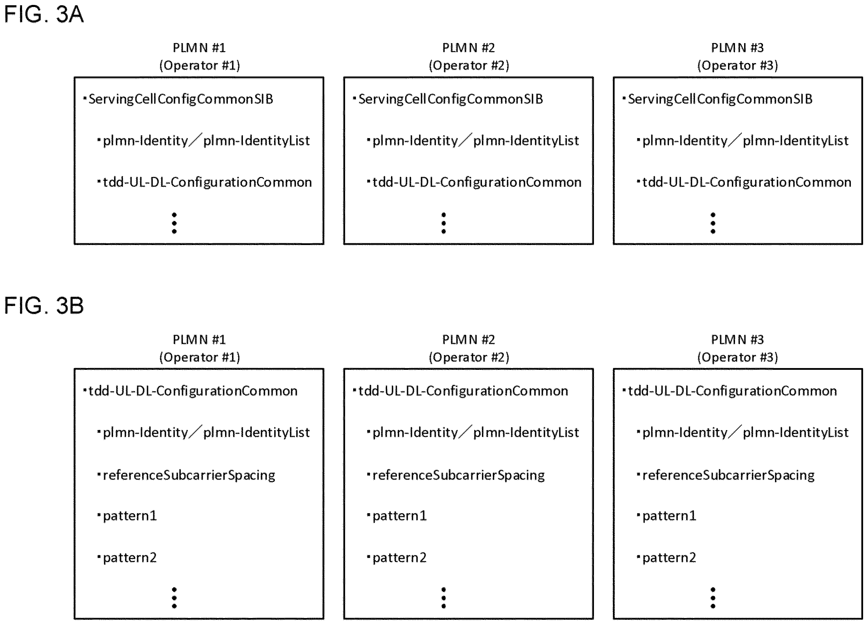

FIG. 3A is a diagram to show an example of association related to PLMN IDs according to a second embodiment. In the example shown in FIG. 3A, correspondence relationship between the PLMN IDs and the operators is similar to that in FIG. 2A or the like.

In the example shown in FIG. 3A, information related to a PLMN ID (for example, plmn-Identity/plmn-IdentityList) is included in ServingCellConfigCommonSIB. In other words, ServingCellConfigCommonSIB is defined for each PLMN ID (each operator). Specifically, tdd-UL-DL-ConfigurationCommon included in ServingCellConfigCommonSIB is defined for each PLMN ID (each operator).

FIG. 3B is a diagram to show another example of the association related to PLMN IDs according to the second embodiment. In the example shown in FIG. 3B, correspondence relationship between the PLMN IDs and the operators is similar to that in FIG. 2A or the like.

In the example shown in FIG. 3B, information related to a PLMN ID (for example, plmn-Identity/plmn-IdentityList) is included in tdd-UL-DL-ConfigurationCommon. In other words, tdd-UL-DL-ConfigurationCommon is defined for each PLMN ID (each operator). Specifically, at least one of parameters (for example, a parameter indicating a subcarrier spacing (referenceSubcarrierSpacing), a parameter indicating a first TDD UL/DL pattern (pattern1), and a parameter indicating a second TDD UL/DL pattern (pattern2)) included in tdd-UL-DL-ConfigurationCommon is defined for each PLMN ID (each operator).

Note that, in a configuration as shown in FIGS. 3A and 3B, a certain parameter may be configured separately for each PLMN ID and another parameter may be configured commonly for a plurality of PLMN IDs.

For example, the parameter indicating the first TDD UL/DL pattern (pattern1) and the parameter indicating the second TDD UL/DL pattern (pattern2) may be configured for each PLMN ID, and the parameter indicating the subcarrier spacing (referenceSubcarrierSpacing) may be configured commonly for a plurality of PLMN IDs.

For example, the parameter indicating the first TDD UL/DL pattern (pattern1) may be configured for each PLMN ID, and the parameter indicating the subcarrier spacing (referenceSubcarrierSpacing) and the parameter indicating the second TDD UL/DL pattern (pattern2) may be configured commonly for a plurality of PLMN IDs.

For example, the parameter indicating the second TDD UL/DL pattern (pattern2) may be configured for each PLMN ID, and the parameter indicating the subcarrier spacing (referenceSubcarrierSpacing) and the parameter indicating the first TDD UL/DL pattern (pattern1) may be configured commonly for a plurality of PLMN IDs.

For example, the parameter indicating the subcarrier spacing (referenceSubcarrierSpacing) may be configured for each PLMN ID, and the parameter indicating the first TDD UL/DL pattern (pattern1) and the parameter indicating the second TDD UL/DL pattern (pattern2) may be configured commonly for a plurality of PLMN IDs.

At least one of information related to an available DL/UL resource and information related to an unavailable DL/UL resource may be included in the UL/DL configuration in TDD (for example, tdd-UL-DL-ConfigurationCommon/TDD-UL-DL-ConfigCommon). This allows configuration and notification of an available/unavailable resource to be performed for each operator.

According to the second embodiment described above, a time resource (for example, UL/DL configuration in TDD) can be configured separately for each specific ID (for example, PLMN ID).

### <Third Embodiment>

Configurations related to random access channels (RACHs) separate (independent) for respective specific IDs (for example, PLMN IDs) may be supported.

In the present disclosure, a RACH, a PRACH, a random access preamble, a random access, a random access procedure, and the like may be interchangeably interpreted.

A UE may receive information related to a RACH configuration configured separately for each of the specific IDs. The UE may control, based on the information related to the RACH configuration, a random access procedure (RACH operation).

The UE may determine a time resource for the RACH, a frequency resource for the RACH, and a preamble of the RACH that are to be configured for each of the specific IDs.

The information related to the RACH configuration may be a RACH configuration (for example, RACH-ConfigCommon). The RACH configuration (for example, RACH-ConfigCommon) may be included in the information related to the initial UL BWP (for example, initialUplinkBWP/BWP-UplinkCommon) .

The information related to the RACH configuration may be associated with a specific ID (for example, PLMN ID).

For example, the configuration information of the serving cell (for example, ServingCellConfigCommonSIB) included in the system information (for example, SIB/SIB1) may include information related to one or a plurality of specific IDs (for example, PLMN IDs). The UE may determine association between the specific ID(s) and the information related to the RACH configuration included in the information related to the initial UL BWP in the configuration information of the serving cell.

For example, the information related to the initial UL BWP (for example, initialUplinkBWP/BWP-UplinkCommon) may include the information related to one or a plurality of specific IDs (for example, PLMN IDs). The UE may determine association between the specific ID(s) and the information related to the RACH configuration included in the information related to the initial UL BWP.

For example, the RACH configuration (for example, RACH-ConfigCommon) may include the information related to one or a plurality of specific IDs (for example, PLMN IDs). The UE may determine association between at least one of information related to a time resource/format configuration for a PRACH (for example, prach-ConfigurationIndex), information related to a start position of a frequency resource for the PRACH (for example, msg1-FrequencyStart), and information related to a sequence of the PRACH (for example, prach-RootSequenceIndex) that are included in the RACH configuration (for example, RACH-ConfigCommon) and the information related to one or a plurality of specific IDs (for example, PLMN IDs).

The UE may determine, based on the specific IDs (for example, PLMN IDs) included in the RACH configuration, a RACH configuration for each of the specific IDs.

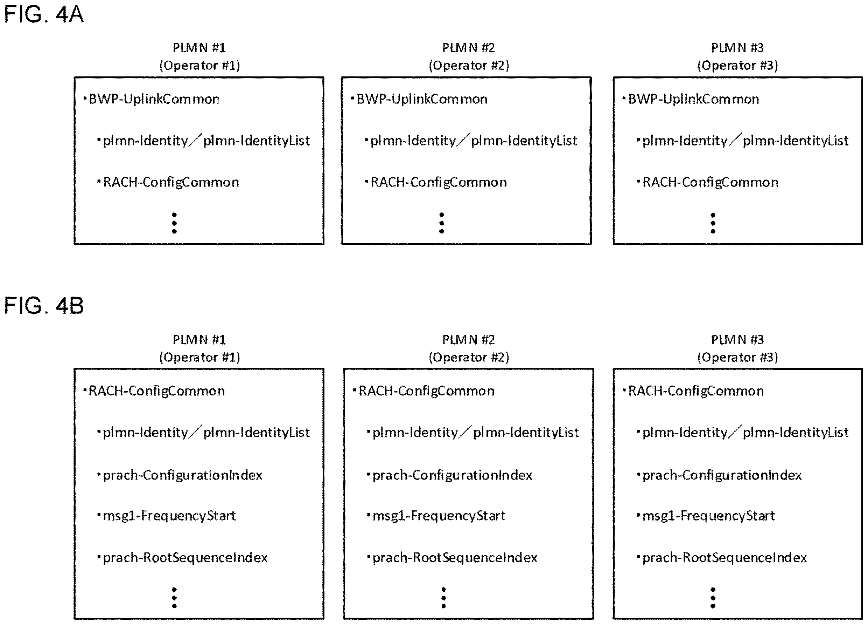

FIG. 4A is a diagram to show an example of association related to PLMN IDs according to a third embodiment. In the example shown in FIG. 4A, correspondence relationship between the PLMN IDs and the operators is similar to that in FIG. 2A or the like.

In the example shown in FIG. 4A, information related to a PLMN ID (for example, plmn-Identity/plmn-IdentityList) is included in BWP-UplinkCommon. In other words, BWP-UplinkCommon is defined for each PLMN ID (each operator). Specifically, RACH-ConfigCommon included in BWP-UplinkCommon is defined for each PLMN ID (each operator).

FIG. 4B is a diagram to show another example of the association related to PLMN IDs according to the third embodiment. In the example shown in FIG. 4B, correspondence relationship between the PLMN IDs and the operators is similar to that in FIG. 2A or the like.

In the example shown in FIG. 4B, information related to a PLMN ID (for example, plmn-Identity/plmn-IdentityList) is included in RACH-ConfigCommon. In other words, RACH-ConfigCommon is defined for each PLMN ID (each operator). Specifically, at least one of parameters (for example, information related to a time resource/format configuration for a PRACH (for example, prach-ConfigurationIndex), information related to a start position of a frequency resource for the PRACH (for example, msg1-FrequencyStart), and information related to a sequence of the PRACH (for example, prach-RootSequenceIndex)) included in RACH-ConfigCommon is defined for each PLMN ID (each operator).

Note that, in a configuration as shown in FIGS. 4A and 4B, a certain parameter may be configured separately for each PLMN ID and another parameter may be configured commonly for a plurality of PLMN IDs.

For example, the information related to the time resource/format configuration for the PRACH (for example, prach-ConfigurationIndex) may be configured for each PLMN ID, and the information related to the start position of the frequency resource for the PRACH (for example, msg1-FrequencyStart) and the information related to the sequence of the PRACH (for example, prach-RootSequenceIndex) may be configured commonly for a plurality of PLMN IDs.

For example, the information related to the time resource/format configuration for the PRACH (for example, prach-ConfigurationIndex) and the information related to the start position of the frequency resource for the PRACH (for example, msg1-FrequencyStart) may be configured for each PLMN ID, and the information related to the sequence of the PRACH (for example, prach-RootSequenceIndex) may be configured commonly for a plurality of PLMN IDs.

For example, the information related to the time resource/format configuration for the PRACH (for example, prach-ConfigurationIndex) and the information related to the sequence of the PRACH (for example, prach-RootSequenceIndex) may be configured for each PLMN ID, and the information related to the start position of the frequency resource for the PRACH (for example, msg1-FrequencyStart) may be configured commonly for a plurality of PLMN IDs.

For example, the information related to the start position of the frequency resource for the PRACH (for example, msg1-FrequencyStart) and the information related to the sequence of the PRACH (for example, prach-RootSequenceIndex) may be configured for each PLMN ID, and the information related to the time resource/format configuration for the PRACH (for example, prach-ConfigurationIndex) may be configured commonly for a plurality of PLMN IDs.

For example, the information related to the sequence of the PRACH (for example, prach-RootSequenceIndex) may be configured for each PLMN ID, and the information related to the time resource/format configuration for the PRACH (for example, prach-ConfigurationIndex) and the information related to the start position of the frequency resource for the PRACH (for example, msg1-FrequencyStart) may be configured commonly for a plurality of PLMN IDs.

For example, the information related to the start position of the frequency resource for the PRACH (for example, msg1-FrequencyStart) may be configured for each PLMN ID, and the information related to the time resource/format configuration for the PRACH (for example, prach-ConfigurationIndex) and the information related to the sequence of the PRACH (for example, prach-RootSequenceIndex) may be configured commonly for a plurality of PLMN IDs.

The UE may include, in a RACH (for example, Message 1 (PRACH)/Message 3 (RRCSetupRequest)/Message A), information related to a specific ID (for example, PLMN ID) and transmit the RACH. The information related to the specific ID (for example, PLMN ID) may be information of a specific ID (PLMN ID) or may be other information associated with the information of the specific ID (PLMN ID).

With this, a PRACH resource (at least one of a time/frequency resource and a preamble) associated with a specific ID (PLMN ID) can be separately determined/configured and a network (base station) can recognize a specific ID (PLMN ID) selected by the UE from a PRACH resource detected.

According to the third embodiment described above, a random access channel can be configured separately for each specific ID (for example, PLMN ID).

### <Fourth Embodiment>

A UE may monitor/detect/receive, besides a specific system information block (for example, SIB1), a different SIB for each specific ID (for example, PLMN ID).

The different SIB may be an SIB (for example, at least one of SIB2 to SIB14) that is other than SIB1 and that is defined in an existing specification or may be an SIB (for example, which may be referred to as SIB N (N is any alphanumeric character)) newly defined different from an SIB defined in an existing specification. The different SIB may be referred to as SIB1X.

In the present disclosure, the different SIB (SIB1X) may be referred to as an SIB associated with a specific ID.

Information/parameter related to an SIB associated with a specific ID may be configured in SIB1. The UE may monitor, based on the information related to the SIB associated with the specific ID configured in SIB1, the SIB associated with the specific ID.

The information related to the SIB associated with the specific ID may be, for example, at least one of information related to a periodicity of the SIB (for example, si-Periodicity), information related to a window length of system information (for example, si-WindowLength), and information related to a configuration for transmission request for the system information (for example, si-RequestConfig) .

At least one of the pieces of information related to the SIB associated with the specific ID may be associated with a specific ID (for example, PLMN ID).

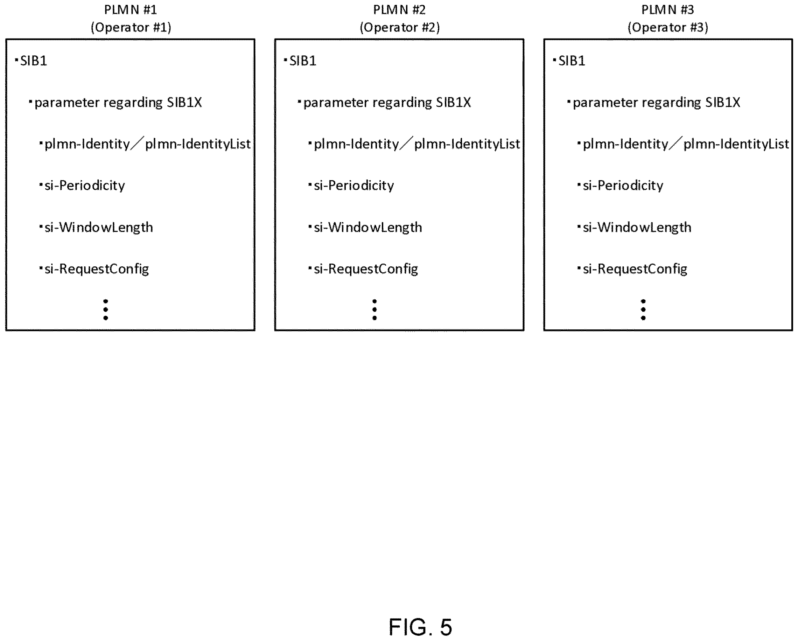

FIG. 5 is a diagram to show an example of association related to PLMN IDs according to a fourth embodiment. In the example shown in FIG. 5, correspondence relationship between the PLMN IDs and the operators is similar to that in FIG. 2A or the like.

In the example shown in FIG. 5, SIB1 includes a parameter regarding SIB1X. The parameter regarding SIB1X includes information related to a PLMN ID (for example, plmn-Identity/plmn-IdentityList). In other words, the parameter regarding SIB1X (SIB1X) is defined for each PLMN ID (each operator). Specifically, at least one of parameters (for example, the information related to a periodicity of the SIB (SIB1X) (for example, si-Periodicity), the information related to the window length of the system information (for example, si-WindowLength), and the information related to the configuration for transmission request for the system information (for example, si-RequestConfig)) that are included in the parameter regarding SIB1X is defined for each PLMN ID (each operator).

Note that, in a configuration as shown in FIG. 5, a certain parameter may be configured separately for each PLMN ID and another parameter may be configured commonly for a plurality of PLMN IDs.

For example, the information related to the periodicity of the SIB (for example, si-Periodicity) may be configured for each PLMN ID, and the information related to the window length of the system information (for example, si-WindowLength) and the information related to the configuration for transmission request for the system information (for example, si-RequestConfig) may be configured commonly for a plurality of PLMN IDs.

For example, the information related to the periodicity of the SIB (for example, si-Periodicity) and the information related to the window length of the system information (for example, si-WindowLength) may be configured for each PLMN ID, and the information related to the configuration for transmission request for the system information (for example, si-RequestConfig) may be configured commonly for a plurality of PLMN IDs.

For example, the information related to the periodicity of the SIB (for example, si-Periodicity) and the information related to the configuration for transmission request for the system information (for example, si-RequestConfig) may be configured for each PLMN ID, and the information related to the window length of the system information (for example, si-WindowLength) may be configured commonly for a plurality of PLMN IDs.

For example, the information related to the window length of the system information (for example, si-WindowLength) and the information related to the configuration for transmission request for the system information (for example, si-RequestConfig) may be configured for each PLMN ID, and the information related to the periodicity of the SIB (for example, si-Periodicity) may be configured commonly for a plurality of PLMN IDs.

For example, the information related to the configuration for transmission request for the system information (for example, si-RequestConfig) may be configured for each PLMN ID, and the information related to the periodicity of the SIB (for example, si-Periodicity) and the information related to the window length of the system information (for example, si-WindowLength) may be configured commonly for a plurality of PLMN IDs.

For example, the information related to the window length of the system information (for example, si-WindowLength) may be configured for each PLMN ID, and the information related to the periodicity of the SIB (for example, si-Periodicity) and the information related to the configuration for transmission request for the system information (for example, si-RequestConfig) may be configured commonly for a plurality of PLMN IDs.

The UE may change/overwrite, based on information notified with an SIB associated with a specific ID, at least one of the pieces of information notified with SIB1.

According to the fourth embodiment described above, system information for each operator can be appropriately configured.

### <Fifth Embodiment>

Separate (independent) configurations related to cell reselection for respective specific IDs (for example, PLMN IDs) may be supported.

A configuration related to cell reselection and a configuration related to measurement in idle mode may be interchangeably interpreted.

A UE may receive information related to a RACH configuration configured separately for each of the specific IDs.

The UE may receive a specific parameter associated with a specific ID (for example, PLMN ID).

Such a specific parameter may be included in a specific SIB. The specific SIB may be an SIB (for example, SIB3/4) defined in an existing specification or may be SIB X described in the fourth embodiment.

The specific parameter may be, for example, at least one of information related to neighboring cells of the same frequency (intra-frequency)/different frequencies (inter-frequency) (for example, intraFreqNeighCellList/interFreqNeighCellList), information related to a non-target cell list for cell reselection (for example, intraFreqBlackCellList/interFreqBlackCellList), information related to a target cell list for cell reselection (for example, intraFreqWhiteCellList/interFreqWhiteCellList), and information related to a cell reselection configuration (for example, cellReselectionInfoCommon/cellReselectionServingFreqInfo/intraFreqCellRe selectionInfo/InterFreqCarrierFreqInfo) .

At least one of the specific parameters described above may be associated with a specific ID (for example, PLMN ID).

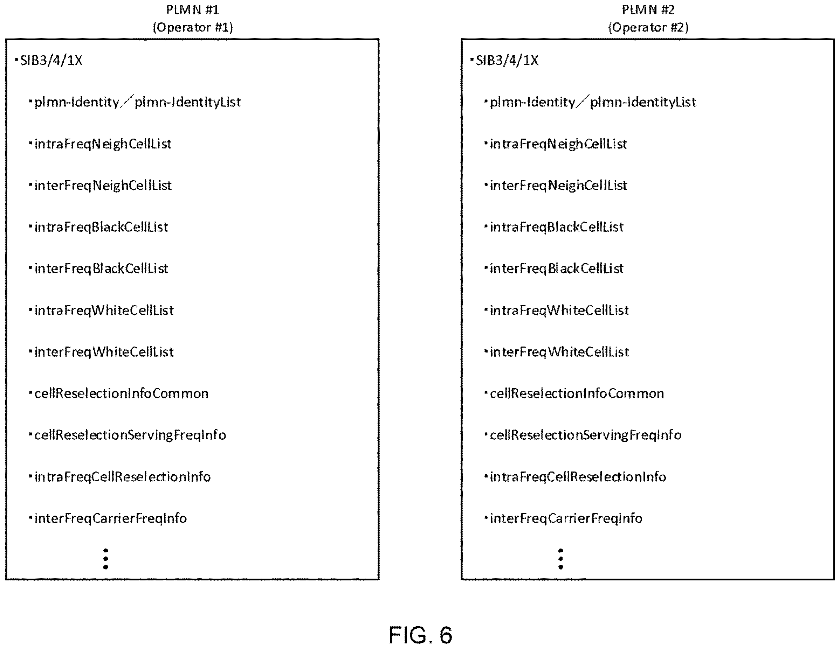

FIG. 6 is a diagram to show an example of association related to PLMN IDs according to a fifth embodiment. In the example shown in FIG. 6, although correspondence relationship between the PLMN IDs and the operators is similar to that in FIG. 2A or the like, PLMN #3 and Operator #3 are omitted for simplification.

In the example shown in FIG. 6, a specific SIB (SIB3/4/1X) includes information related to a PLMN ID (for example, plmn-Identity/plmn-IdentityList) and a specific parameter related to cell reselection. The specific parameter may be, for example, at least one of information related to neighboring cells of the same frequency (intra-frequency)/different frequencies (inter-frequency) (for example, intraFreqNeighCellList/interFreqNeighCellList), information related to a non-target cell list for cell reselection (for example, intraFreqBlackCellList/interFreqBlackCellList), information related to a target cell list for cell reselection (for example, intraFreqWhiteCellList/interFreqWhiteCellList), and information related to a cell reselection configuration (for example, cellReselectionInfoCommon/cellReselectionServingFreqInfo/intraFreqCellRe selectionInfo/InterFreqCarrierFreqInfo). Although these parameters are all described in the example shown in FIG. 6, this is only an example, and thus a configuration including at least one of these parameters may be conceivable.

In the example shown in FIG. 6, a specific parameter related to cell reselection is defined for each PLMN ID (each operator).

Note that, in a configuration as shown in FIG. 6, a certain parameter may be configured separately for each PLMN ID and another parameter may be configured commonly for a plurality of PLMN IDs.

According to the fifth embodiment described above, at least one of cell reselection and measurement in idle mode can be appropriately configured for each operator.

### <Variations>

The configuration/parameter for each specific ID (for example, PLMN ID) described in the embodiments above is only an example. Besides the configuration/parameter described in the embodiments above, any configuration/parameter (for example, broadcast information) for a UE at the time of initial access/in idle mode may be configured/notified for each specific ID (for example, PLMN ID).

A specific ID (for example, PLMN ID) and a configuration related to the specific ID may correspond to each other in a one-to-one manner. In other words, one configuration may be associated with one specific ID.

Specific IDs (for example, PLMN IDs) and a configuration related to the specific IDs may correspond to each other in a many (one or more)-to-one manner. In other words, one configuration may be associated with a plurality of (one or more) specific IDs (for example, a specific ID list).

In the embodiments of the present disclosure, a cell where network sharing is performed may be a specific cell. For example, the cell where network sharing is performed may be an SCell, and the network sharing may be configured not to be performed in any PCell (SpCell). Alternatively, the cell where network sharing is performed may be a PCell (SpCell), and the network sharing may be configured not to be performed in any SCell.

### (Radio Communication System)

Hereinafter, a structure of a radio communication system according to one embodiment of the present disclosure will be described. In this radio communication system, the radio communication method according to each embodiment of the present disclosure described above may be used alone or may be used in combination for communication.

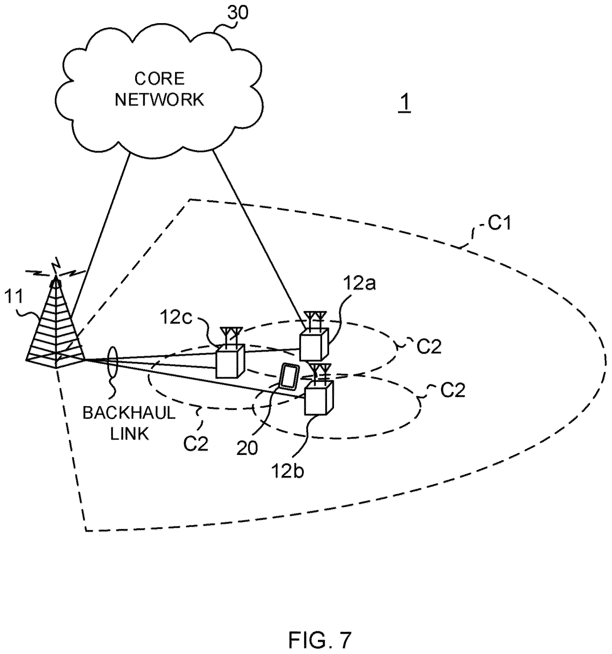

FIG. 7 is a diagram to show an example of a schematic structure of the radio communication system according to one embodiment. The radio communication system 1 may be a system implementing a communication using Long Term Evolution (LTE), 5th generation mobile communication system New Radio (5G NR) and so on the specifications of which have been drafted by Third Generation Partnership Project (3GPP).

The radio communication system 1 may support dual connectivity (multi-RAT dual connectivity (MR-DC)) between a plurality of Radio Access Technologies (RATs). The MR-DC may include dual connectivity (E-UTRA-NR Dual Connectivity (EN-DC)) between LTE (Evolved Universal Terrestrial Radio Access (E-UTRA)) and NR, dual connectivity (NR-E-UTRA Dual Connectivity (NE-DC)) between NR and LTE, and so on.

In EN-DC, a base station (eNB) of LTE (E-UTRA) is a master node (MN), and a base station (gNB) of NR is a secondary node (SN). In NE-DC, a base station (gNB) of NR is an MN, and a base station (eNB) of LTE (E-UTRA) is an SN.

The radio communication system 1 may support dual connectivity between a plurality of base stations in the same RAT (for example, dual connectivity (NR-NR Dual Connectivity (NN-DC)) where both of an MN and an SN are base stations (gNB) of NR).

The radio communication system 1 may include a base station 11 that forms a macro cell C1 of a relatively wide coverage, and base stations 12 (12a to 12c) that form small cells C2, which are placed within the macro cell C1 and which are narrower than the macro cell C1. The user terminal 20 may be located in at least one cell. The arrangement, the number, and the like of each cell and user terminal 20 are by no means limited to the aspect shown in the diagram. Hereinafter, the base stations 11 and 12 will be collectively referred to as "base stations 10," unless specified otherwise.

The user terminal 20 may be connected to at least one of the plurality of base stations 10. The user terminal 20 may use at least one of carrier aggregation (CA) and dual connectivity (DC) using a plurality of component carriers (CCs).

Each CC may be included in at least one of a first frequency band (Frequency Range 1 (FR1)) and a second frequency band (Frequency Range 2 (FR2)). The macro cell C1 may be included in FR1, and the small cells C2 may be included in FR2. For example, FR1 may be a frequency band of 6 GHz or less (sub-6 GHz), and FR2 may be a frequency band which is higher than 24 GHz (above-24 GHz). Note that frequency bands, definitions and so on of FR1 and FR2 are by no means limited to these, and for example, FR1 may correspond to a frequency band which is higher than FR2.

The user terminal 20 may communicate using at least one of time division duplex (TDD) and frequency division duplex (FDD) in each CC.

The plurality of base stations 10 may be connected by a wired connection (for example, optical fiber in compliance with the Common Public Radio Interface (CPRI), the X2 interface and so on) or a wireless connection (for example, an NR communication). For example, if an NR communication is used as a backhaul between the base stations 11 and 12, the base station 11 corresponding to a higher station may be referred to as an "Integrated Access Backhaul (IAB) donor," and the base station 12 corresponding to a relay station (relay) may be referred to as an "IAB node."

The base station 10 may be connected to a core network 30 through another base station 10 or directly. For example, the core network 30 may include at least one of Evolved Packet Core (EPC), 5G Core Network (5GCN), Next Generation Core (NGC), and so on.

The user terminal 20 may be a terminal supporting at least one of communication schemes such as LTE, LTE-A, 5G, and so on.

In the radio communication system 1, an orthogonal frequency division multiplexing (OFDM)-based wireless access scheme may be used. For example, in at least one of the downlink (DL) and the uplink (UL), Cyclic Prefix OFDM (CP-OFDM), Discrete Fourier Transform Spread OFDM (DFT-s-OFDM), Orthogonal Frequency Division Multiple Access (OFDMA), Single Carrier Frequency Division Multiple Access (SC-FDMA), and so on may be used.

The wireless access scheme may be referred to as a "waveform." Note that, in the radio communication system 1, another wireless access scheme (for example, another single carrier transmission scheme, another multi-carrier transmission scheme) may be used for a wireless access scheme in the UL and the DL.

In the radio communication system 1, a downlink shared channel (Physical Downlink Shared Channel (PDSCH)), which is used by each user terminal 20 on a shared basis, a broadcast channel (Physical Broadcast Channel (PBCH)), a downlink control channel (Physical Downlink Control Channel (PDCCH)) and so on, may be used as downlink channels.

In the radio communication system 1, an uplink shared channel (Physical Uplink Shared Channel (PUSCH)), which is used by each user terminal 20 on a shared basis, an uplink control channel (Physical Uplink Control Channel (PUCCH)), a random access channel (Physical Random Access Channel (PRACH)) and so on may be used as uplink channels.

User data, higher layer control information, System Information Blocks (SIBs) and so on are communicated on the PDSCH. User data, higher layer control information and so on may be communicated on the PUSCH. The Master Information Blocks (MIBs) may be communicated on the PBCH.

Lower layer control information may be communicated on the PDCCH. For example, the lower layer control information may include downlink control information (DCI) including scheduling information of at least one of the PDSCH and the PUSCH.

Note that DCI for scheduling the PDSCH may be referred to as "DL assignment," "DL DCI," and so on, and DCI for scheduling the PUSCH may be referred to as "UL grant," "UL DCI," and so on. Note that the PDSCH may be interpreted as "DL data", and the PUSCH may be interpreted as "UL data."

For detection of the PDCCH, a control resource set (CORESET) and a search space may be used. The CORESET corresponds to a resource to search DCI. The search space corresponds to a search area and a search method of PDCCH candidates. One CORESET may be associated with one or more search spaces. The UE may monitor a CORESET associated with a certain search space, based on search space configuration.

One search space may correspond to a PDCCH candidate corresponding to one or more aggregation levels. One or more search spaces may be referred to as a "search space set." Note that a "search space," a "search space set," a "search space configuration," a "search space set configuration," a "CORESET," a "CORESET configuration" and so on of the present disclosure may be interchangeably interpreted.

Uplink control information (UCI) including at least one of channel state information (CSI), transmission confirmation information (for example, which may be also referred to as Hybrid Automatic Repeat reQuest ACKnowledgement (HARQ-ACK), ACK/NACK, and so on), and scheduling request (SR) may be communicated by means of the PUCCH. By means of the PRACH, random access preambles for establishing connections with cells may be communicated.

Note that the downlink, the uplink, and so on in the present disclosure may be expressed without a term of "link." In addition, various channels may be expressed without adding "Physical" to the head.

In the radio communication system 1, a synchronization signal (SS), a downlink reference signal (DL-RS), and so on may be communicated. In the radio communication system 1, a cell-specific reference signal (CRS), a channel state information-reference signal (CSI-RS), a demodulation reference signal (DMRS), a positioning reference signal (PRS), a phase tracking reference signal (PTRS), and so on may be communicated as the DL-RS.

For example, the synchronization signal may be at least one of a primary synchronization signal (PSS) and a secondary synchronization signal (SSS). A signal block including an SS (PSS, SSS) and a PBCH (and a DMRS for a PBCH) may be referred to as an "SS/PBCH block," an "SS Block (SSB)," and so on. Note that an SS, an SSB, and so on may be also referred to as a "reference signal."

In the radio communication system 1, a sounding reference signal (SRS), a demodulation reference signal (DMRS), and so on may be communicated as an uplink reference signal (UL-RS). Note that DMRS may be referred to as a "user terminal specific reference signal (UE-specific Reference Signal)."

### (Base Station)

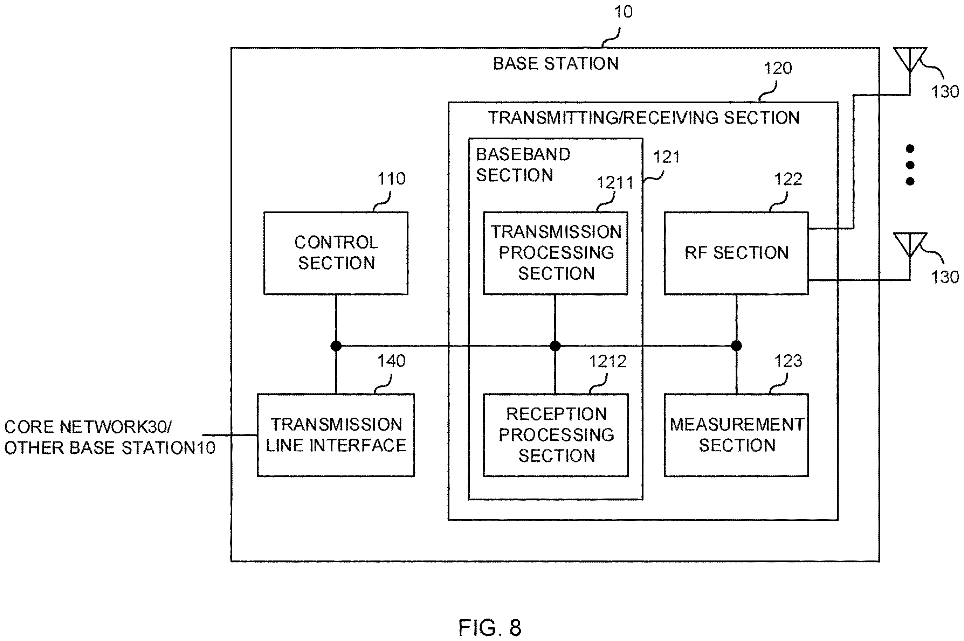

FIG. 8 is a diagram to show an example of a structure of the base station according to one embodiment. The base station 10 includes a control section 110, a transmitting/receiving section 120, transmitting/receiving antennas 130 and a communication path interface (transmission line interface) 140. Note that the base station 10 may include one or more control sections 110, one or more transmitting/receiving sections 120, one or more transmitting/receiving antennas 130, and one or more communication path interfaces 140.

Note that, the present example primarily shows functional blocks that pertain to characteristic parts of the present embodiment, and it is assumed that the base station 10 may include other functional blocks that are necessary for radio communication as well. Part of the processes of each section described below may be omitted.

The control section 110 controls the whole of the base station 10. The control section 110 can be constituted with a controller, a control circuit, or the like described based on general understanding of the technical field to which the present disclosure pertains.

The control section 110 may control generation of signals, scheduling (for example, resource allocation, mapping), and so on. The control section 110 may control transmission and reception, measurement and so on using the transmitting/receiving section 120, the transmitting/receiving antennas 130, and the communication path interface 140. The control section 110 may generate data, control information, a sequence and so on to transmit as a signal, and forward the generated items to the transmitting/receiving section 120. The control section 110 may perform call processing (setting up, releasing) for communication channels, manage the state of the base station 10, and manage the radio resources.

The transmitting/receiving section 120 may include a baseband section 121, a Radio Frequency (RF) section 122, and a measurement section 123. The baseband section 121 may include a transmission processing section 1211 and a reception processing section 1212. The transmitting/receiving section 120 can be constituted with a transmitter/receiver, an RF circuit, a baseband circuit, a filter, a phase shifter, a measurement circuit, a transmitting/receiving circuit, or the like described based on general understanding of the technical field to which the present disclosure pertains.

The transmitting/receiving section 120 may be structured as a transmitting/receiving section in one entity, or may be constituted with a transmitting section and a receiving section. The transmitting section may be constituted with the transmission processing section 1211, and the RF section 122. The receiving section may be constituted with the reception processing section 1212, the RF section 122, and the measurement section 123.

The transmitting/receiving antennas 130 can be constituted with antennas, for example, an array antenna, or the like described based on general understanding of the technical field to which the present disclosure pertains.

The transmitting/receiving section 120 may transmit the above-described downlink channel, synchronization signal, downlink reference signal, and so on. The transmitting/receiving section 120 may receive the above-described uplink channel, uplink reference signal, and so on.

The transmitting/receiving section 120 may form at least one of a transmit beam and a receive beam by using digital beam forming (for example, precoding), analog beam forming (for example, phase rotation), and so on.

The transmitting/receiving section 120 (transmission processing section 1211) may perform the processing of the Packet Data Convergence Protocol (PDCP) layer, the processing of the Radio Link Control (RLC) layer (for example, RLC retransmission control), the processing of the Medium Access Control (MAC) layer (for example, HARQ retransmission control), and so on, for example, on data and control information and so on acquired from the control section 110, and may generate bit string to transmit.

The transmitting/receiving section 120 (transmission processing section 1211) may perform transmission processing such as channel coding (which may include error correction coding), modulation, mapping, filtering, discrete Fourier transform (DFT) processing (as necessary), inverse fast Fourier transform (IFFT) processing, precoding, digital-to-analog conversion, and so on, on the bit string to transmit, and output a baseband signal.

The transmitting/receiving section 120 (RF section 122) may perform modulation to a radio frequency band, filtering, amplification, and so on, on the baseband signal, and transmit the signal of the radio frequency band through the transmitting/receiving antennas 130.

On the other hand, the transmitting/receiving section 120 (RF section 122) may perform amplification, filtering, demodulation to a baseband signal, and so on, on the signal of the radio frequency band received by the transmitting/receiving antennas 130.

The transmitting/receiving section 120 (reception processing section 1212) may apply reception processing such as analog-digital conversion, fast Fourier transform (FFT) processing, inverse discrete Fourier transform (IDFT) processing (as necessary), filtering, de-mapping, demodulation, decoding (which may include error correction decoding), MAC layer processing, the processing of the RLC layer and the processing of the PDCP layer, and so on, on the acquired baseband signal, and acquire user data, and so on.

The transmitting/receiving section 120 (measurement section 123) may perform the measurement related to the received signal. For example, the measurement section 123 may perform Radio Resource Management (RRM) measurement, Channel State Information (CSI) measurement, and so on, based on the received signal. The measurement section 123 may measure a received power (for example, Reference Signal Received Power (RSRP)), a received quality (for example, Reference Signal Received Quality (RSRQ), a Signal to Interference plus Noise Ratio (SINR), a Signal to Noise Ratio (SNR)), a signal strength (for example, Received Signal Strength Indicator (RSSI)), channel information (for example, CSI), and so on. The measurement results may be output to the control section 110.

The communication path interface 140 may perform transmission/reception (backhaul signaling) of a signal with an apparatus included in the core network 30 or other base stations 10, and so on, and acquire or transmit user data (user plane data), control plane data, and so on for the user terminal 20.

Note that the transmitting section and the receiving section of the base station 10 in the present disclosure may be constituted with at least one of the transmitting/receiving section 120, the transmitting/receiving antennas 130, and the communication path interface 140.

The transmitting/receiving section 120 may transmit configuration information of a serving cell associated with a Public Land Mobile Network (PLMN) ID, the configuration information being included in a first system information block (SIB, for example, SIB1). The control section 110 may indicate, using the configuration information, at least one of a frequency resource and a time resource associated with the PLMN ID (first and second embodiments).

The transmitting/receiving section 120 may transmit configuration information of a random access channel (RACH) associated with a Public Land Mobile Network (PLMN) ID, the configuration information being included in a system information block (SIB, for example, SIB1). The control section 110 may control, using the configuration information of the RACH, a random access procedure associated with the PLMN ID (third embodiment).

The transmitting/receiving section 120 may transmit configuration information of a second SIB (for example, SIB other than SIB1) associated with a Public Land Mobile Network (PLMN) ID, the configuration information being included in a first system information block (SIB, for example, SIB1). The control section 110 may control, using the configuration information of the second SIB, transmission of the second SIB associated with the PLMN ID (fourth and fifth embodiments).

### (User Terminal)

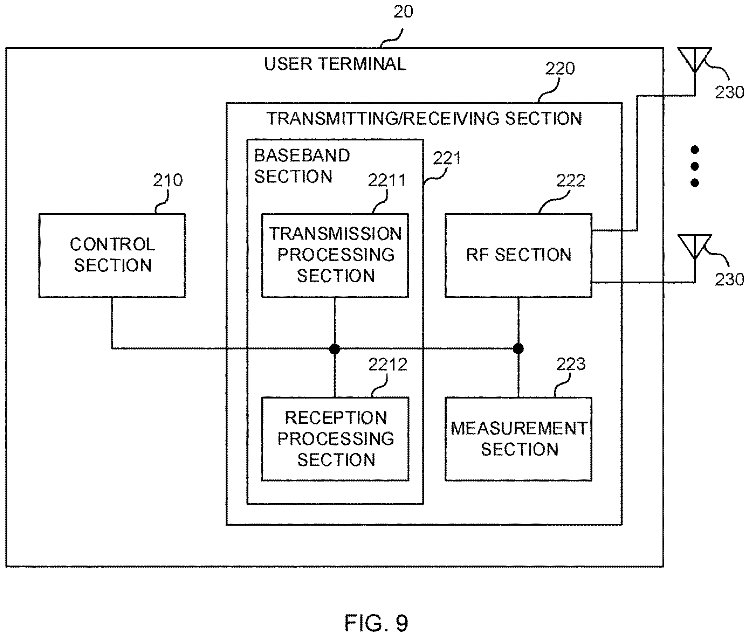

FIG. 9 is a diagram to show an example of a structure of the user terminal according to one embodiment. The user terminal 20 includes a control section 210, a transmitting/receiving section 220, and transmitting/receiving antennas 230. Note that the user terminal 20 may include one or more control sections 210, one or more transmitting/receiving sections 220, and one or more transmitting/receiving antennas 230.

Note that, the present example primarily shows functional blocks that pertain to characteristic parts of the present embodiment, and it is assumed that the user terminal 20 may include other functional blocks that are necessary for radio communication as well. Part of the processes of each section described below may be omitted.

The control section 210 controls the whole of the user terminal 20. The control section 210 can be constituted with a controller, a control circuit, or the like described based on general understanding of the technical field to which the present disclosure pertains.

The control section 210 may control generation of signals, mapping, and so on. The control section 210 may control transmission/reception, measurement and so on using the transmitting/receiving section 220, and the transmitting/receiving antennas 230. The control section 210 generates data, control information, a sequence and so on to transmit as a signal, and may forward the generated items to the transmitting/receiving section 220.

The transmitting/receiving section 220 may include a baseband section 221, an RF section 222, and a measurement section 223. The baseband section 221 may include a transmission processing section 2211 and a reception processing section 2212. The transmitting/receiving section 220 can be constituted with a transmitter/receiver, an RF circuit, a baseband circuit, a filter, a phase shifter, a measurement circuit, a transmitting/receiving circuit, or the like described based on general understanding of the technical field to which the present disclosure pertains.

The transmitting/receiving section 220 may be structured as a transmitting/receiving section in one entity, or may be constituted with a transmitting section and a receiving section. The transmitting section may be constituted with the transmission processing section 2211, and the RF section 222. The receiving section may be constituted with the reception processing section 2212, the RF section 222, and the measurement section 223.

The transmitting/receiving antennas 230 can be constituted with antennas, for example, an array antenna, or the like described based on general understanding of the technical field to which the present disclosure pertains.

The transmitting/receiving section 220 may receive the above-described downlink channel, synchronization signal, downlink reference signal, and so on. The transmitting/receiving section 220 may transmit the above-described uplink channel, uplink reference signal, and so on.

The transmitting/receiving section 220 may form at least one of a transmit beam and a receive beam by using digital beam forming (for example, precoding), analog beam forming (for example, phase rotation), and so on.

The transmitting/receiving section 220 (transmission processing section 2211) may perform the processing of the PDCP layer, the processing of the RLC layer (for example, RLC retransmission control), the processing of the MAC layer (for example, HARQ retransmission control), and so on, for example, on data and control information and so on acquired from the control section 210, and may generate bit string to transmit.

The transmitting/receiving section 220 (transmission processing section 2211) may perform transmission processing such as channel coding (which may include error correction coding), modulation, mapping, filtering, DFT processing (as necessary), IFFT processing, precoding, digital-to-analog conversion, and so on, on the bit string to transmit, and output a baseband signal.

Note that, whether to apply DFT processing or not may be based on the configuration of the transform precoding. The transmitting/receiving section 220 (transmission processing section 2211) may perform, for a certain channel (for example, PUSCH), the DFT processing as the above-described transmission processing to transmit the channel by using a DFT-s-OFDM waveform if transform precoding is enabled, and otherwise, does not need to perform the DFT processing as the above-described transmission process.

The transmitting/receiving section 220 (RF section 222) may perform modulation to a radio frequency band, filtering, amplification, and so on, on the baseband signal, and transmit the signal of the radio frequency band through the transmitting/receiving antennas 230.

On the other hand, the transmitting/receiving section 220 (RF section 222) may perform amplification, filtering, demodulation to a baseband signal, and so on, on the signal of the radio frequency band received by the transmitting/receiving antennas 230.

The transmitting/receiving section 220 (reception processing section 2212) may apply a receiving process such as analog-digital conversion, FFT processing, IDFT processing (as necessary), filtering, de-mapping, demodulation, decoding (which may include error correction decoding), MAC layer processing, the processing of the RLC layer and the processing of the PDCP layer, and so on, on the acquired baseband signal, and acquire user data, and so on.

The transmitting/receiving section 220 (measurement section 223) may perform the measurement related to the received signal. For example, the measurement section 223 may perform RRM measurement, CSI measurement, and so on, based on the received signal. The measurement section 223 may measure a received power (for example, RSRP), a received quality (for example, RSRQ, SINR, SNR), a signal strength (for example, RSSI), channel information (for example, CSI), and so on. The measurement results may be output to the control section 210.

Note that the transmitting section and the receiving section of the user terminal 20 in the present disclosure may be constituted with at least one of the transmitting/receiving section 220 and the transmitting/receiving antennas 230.

The transmitting/receiving section 220 may receive configuration information of a serving cell associated with a Public Land Mobile Network (PLMN) ID, the configuration information being included in a first system information block (SIB, for example, SIB1). The control section 210 may determine, based on the configuration information, at least one of a frequency resource and a time resource associated with the PLMN ID (first and second embodiments).

The frequency resource may be at least one of an initial downlink bandwidth part and an initial uplink bandwidth part. The frequency resource may be an initial downlink bandwidth part and an initial uplink bandwidth part (first embodiment).

The time resource may be a resource based on an uplink/downlink configuration for time division duplex (second embodiment).

The control section 210 may control, based on information related to a second SIB included in the configuration information, monitoring of such another system information block (first embodiment).

The transmitting/receiving section 220 may receive configuration information of a random access channel (RACH) associated with a Public Land Mobile Network (PLMN) ID, the configuration information being included in a system information block (SIB, for example, SIB1). The control section 210 may control, based on the configuration information of the RACH, a random access procedure associated with the PLMN ID (third embodiment).

The configuration information of the RACH may be included in information related to an initial uplink bandwidth part. The information related to the initial uplink bandwidth part may include the PLMN ID (third embodiment).

The configuration information of the RACH may include the PLMN ID and at least one of information related to a time resource and a format configuration for a physical random access channel (PRACH), information related to a start position of a frequency resource for the PRACH, and information related to a sequence of the PRACH (third embodiment).

The control section 210 may report the PLMN ID for the terminal by using the RACH (third embodiment).

The transmitting/receiving section 220 may receive configuration information of a second SIB (for example, SIB other than SIB1) associated with a Public Land Mobile Network (PLMN) ID, the configuration information being included in a first system information block (SIB, for example, SIB1). The control section 210 may control, based on the configuration information of the second SIB, monitoring of the second SIB associated with the PLMN ID (fourth and fifth embodiments).

The configuration information of the second SIB may include at least one of information related to a periodicity of the second SIB, information related to a window length of the second SIB, and information related to a configuration for transmission request for system information (fourth embodiment).

The control section 210 may change at least one of configurations based on the first SIB by using a configuration based on the second SIB (fourth embodiment).

The second SIB may include information related to cell reselection (fifth embodiment).

### (Hardware Structure)

Note that the block diagrams that have been used to describe the above embodiments show blocks in functional units. These functional blocks (components) may be implemented in arbitrary combinations of at least one of hardware and software. Also, the method for implementing each functional block is not particularly limited. That is, each functional block may be realized by one piece of apparatus that is physically or logically coupled, or may be realized by directly or indirectly connecting two or more physically or logically separate pieces of apparatus (for example, via wire, wireless, or the like) and using these plurality of pieces of apparatus. The functional blocks may be implemented by combining softwares into the apparatus described above or the plurality of apparatuses described above.

Here, functions include judgment, determination, decision, calculation, computation, processing, derivation, investigation, search, confirmation, reception, transmission, output, access, resolution, selection, designation, establishment, comparison, assumption, expectation, considering, broadcasting, notifying, communicating, forwarding, configuring, reconfiguring, allocating (mapping), assigning, and the like, but function are by no means limited to these. For example, functional block (components) to implement a function of transmission may be referred to as a "transmitting section (transmitting unit)," a "transmitter," and the like. The method for implementing each component is not particularly limited as described above.

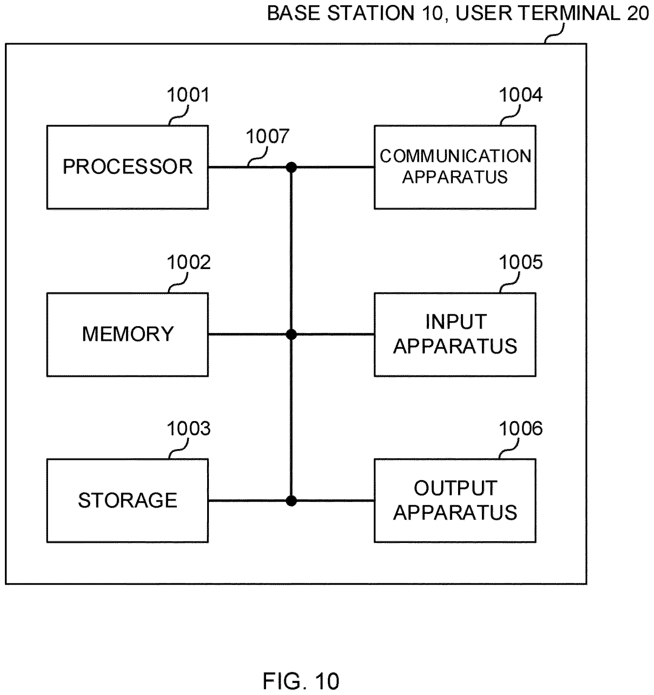

For example, a base station, a user terminal, and so on according to one embodiment of the present disclosure may function as a computer that executes the processes of the radio communication method of the present disclosure. FIG. 10 is a diagram to show an example of a hardware structure of the base station and the user terminal according to one embodiment. Physically, the above-described base station 10 and user terminal 20 may each be formed as a computer apparatus that includes a processor 1001, a memory 1002, a storage 1003, a communication apparatus 1004, an input apparatus 1005, an output apparatus 1006, a bus 1007, and so on.

Note that in the present disclosure, the words such as an apparatus, a circuit, a device, a section, a unit, and so on can be interchangeably interpreted. The hardware structure of the base station 10 and the user terminal 20 may be configured to include one or more of apparatuses shown in the drawings, or may be configured not to include part of apparatuses.

For example, although only one processor 1001 is shown, a plurality of processors may be provided. Furthermore, processes may be implemented with one processor or may be implemented at the same time, in sequence, or in different manners with two or more processors. Note that the processor 1001 may be implemented with one or more chips.

Each function of the base station 10 and the user terminals 20 is implemented, for example, by allowing certain software (programs) to be read on hardware such as the processor 1001 and the memory 1002, and by allowing the processor 1001 to perform calculations to control communication via the communication apparatus 1004 and control at least one of reading and writing of data in the memory 1002 and the storage 1003.

The processor 1001 controls the whole computer by, for example, running an operating system. The processor 1001 may be configured with a central processing unit (CPU), which includes interfaces with peripheral apparatus, control apparatus, computing apparatus, a register, and so on. For example, at least part of the above-described control section 110 (210), the transmitting/receiving section 120 (220), and so on may be implemented by the processor 1001.

Furthermore, the processor 1001 reads programs (program codes), software modules, data, and so on from at least one of the storage 1003 and the communication apparatus 1004, into the memory 1002, and executes various processes according to these. As for the programs, programs to allow computers to execute at least part of the operations of the above-described embodiments are used. For example, the control section 110 (210) may be implemented by control programs that are stored in the memory 1002 and that operate on the processor 1001, and other functional blocks may be implemented likewise.

The memory 1002 is a computer-readable recording medium, and may be constituted with, for example, at least one of a Read Only Memory (ROM), an Erasable Programmable ROM (EPROM), an Electrically EPROM (EEPROM), a Random Access Memory (RAM), and other appropriate storage media. The memory 1002 may be referred to as a "register," a "cache," a "main memory (primary storage apparatus)" and so on. The memory 1002 can store executable programs (program codes), software modules, and the like for implementing the radio communication method according to one embodiment of the present disclosure.

The storage 1003 is a computer-readable recording medium, and may be constituted with, for example, at least one of a flexible disk, a floppy (registered trademark) disk, a magneto-optical disk (for example, a compact disc (Compact Disc ROM (CD-ROM) and so on), a digital versatile disc, a Blu-ray (registered trademark) disk), a removable disk, a hard disk drive, a smart card, a flash memory device (for example, a card, a stick, and a key drive), a magnetic stripe, a database, a server, and other appropriate storage media. The storage 1003 may be referred to as "secondary storage apparatus."

The communication apparatus 1004 is hardware (transmitting/receiving device) for allowing inter-computer communication via at least one of wired and wireless networks, and may be referred to as, for example, a "network device," a "network controller," a "network card," a "communication module," and so on. The communication apparatus 1004 may be configured to include a high frequency switch, a duplexer, a filter, a frequency synthesizer, and so on in order to realize, for example, at least one of frequency division duplex (FDD) and time division duplex (TDD). For example, the above-described transmitting/receiving section 120 (220), the transmitting/receiving antennas 130 (230), and so on may be implemented by the communication apparatus 1004. In the transmitting/receiving section 120 (220), the transmitting section 120a (220a) and the receiving section 120b (220b) can be implemented while being separated physically or logically.

The input apparatus 1005 is an input device that receives input from the outside (for example, a keyboard, a mouse, a microphone, a switch, a button, a sensor, and so on). The output apparatus 1006 is an output device that allows sending output to the outside (for example, a display, a speaker, a Light Emitting Diode (LED) lamp, and so on). Note that the input apparatus 1005 and the output apparatus 1006 may be provided in an integrated structure (for example, a touch panel).

Furthermore, these types of apparatus, including the processor 1001, the memory 1002, and others, are connected by a bus 1007 for communicating information. The bus 1007 may be formed with a single bus, or may be formed with buses that vary between pieces of apparatus.

Also, the base station 10 and the user terminals 20 may be structured to include hardware such as a microprocessor, a digital signal processor (DSP), an Application Specific Integrated Circuit (ASIC), a Programmable Logic Device (PLD), a Field Programmable Gate Array (FPGA), and so on, and part or all of the functional blocks may be implemented by the hardware. For example, the processor 1001 may be implemented with at least one of these pieces of hardware.

### (Variations)

Note that the terminology described in the present disclosure and the terminology that is needed to understand the present disclosure may be replaced by other terms that convey the same or similar meanings. For example, a "channel," a "symbol," and a "signal" (or signaling) may be interchangeably interpreted. Also, "signals" may be "messages." A reference signal may be abbreviated as an "RS," and may be referred to as a "pilot," a "pilot signal," and so on, depending on which standard applies. Furthermore, a "component carrier (CC)" may be referred to as a "cell," a "frequency carrier," a "carrier frequency" and so on.

A radio frame may be constituted of one or a plurality of periods (frames) in the time domain. Each of one or a plurality of periods (frames) constituting a radio frame may be referred to as a "subframe." Furthermore, a subframe may be constituted of one or a plurality of slots in the time domain. A subframe may be a fixed time length (for example, 1 ms) independent of numerology.

Here, numerology may be a communication parameter applied to at least one of transmission and reception of a certain signal or channel. For example, numerology may indicate at least one of a subcarrier spacing (SCS), a bandwidth, a symbol length, a cyclic prefix length, a transmission time interval (TTI), the number of symbols per TTI, a radio frame structure, a particular filter processing performed by a transceiver in the frequency domain, a particular windowing processing performed by a transceiver in the time domain, and so on.

A slot may be constituted of one or a plurality of symbols in the time domain (Orthogonal Frequency Division Multiplexing (OFDM) symbols, Single Carrier Frequency Division Multiple Access (SC-FDMA) symbols, and so on). Furthermore, a slot may be a time unit based on numerology.

A slot may include a plurality of mini-slots. Each mini-slot may be constituted of one or a plurality of symbols in the time domain. A mini-slot may be referred to as a "sub-slot." A mini-slot may be constituted of symbols less than the number of slots. A PDSCH (or PUSCH) transmitted in a time unit larger than a mini-slot may be referred to as "PDSCH (PUSCH) mapping type A." A PDSCH (or PUSCH) transmitted using a mini-slot may be referred to as "PDSCH (PUSCH) mapping type B."

A radio frame, a subframe, a slot, a mini-slot, and a symbol all express time units in signal communication. A radio frame, a subframe, a slot, a mini-slot, and a symbol may each be called by other applicable terms. Note that time units such as a frame, a subframe, a slot, mini-slot, and a symbol in the present disclosure may be interchangeably interpreted.

For example, one subframe may be referred to as a "TTI," a plurality of consecutive subframes may be referred to as a "TTI," or one slot or one mini-slot may be referred to as a "TTI." That is, at least one of a subframe and a TTI may be a subframe (1 ms) in existing LTE, may be a shorter period than 1 ms (for example, 1 to 13 symbols), or may be a longer period than 1 ms. Note that a unit expressing TTI may be referred to as a "slot," a "mini-slot," and so on instead of a "subframe."

Here, a TTI refers to the minimum time unit of scheduling in radio communication, for example. For example, in LTE systems, a base station schedules the allocation of radio resources (such as a frequency bandwidth and transmit power that are available for each user terminal) for the user terminal in TTI units. Note that the definition of TTIs is not limited to this.

TTIs may be transmission time units for channel-encoded data packets (transport blocks), code blocks, or codewords, or may be the unit of processing in scheduling, link adaptation, and so on. Note that, when TTIs are given, the time interval (for example, the number of symbols) to which transport blocks, code blocks, codewords, or the like are actually mapped may be shorter than the TTIs.

Note that, in the case where one slot or one mini-slot is referred to as a TTI, one or more TTIs (that is, one or more slots or one or more mini-slots) may be the minimum time unit of scheduling. Furthermore, the number of slots (the number of mini-slots) constituting the minimum time unit of the scheduling may be controlled.

A TTI having a time length of 1 ms may be referred to as a "normal TTI" (TTI in 3GPP Rel. 8 to Rel. 12), a "long TTI," a "normal subframe," a "long subframe," a "slot" and so on. A TTI that is shorter than a normal TTI may be referred to as a "shortened TTI," a "short TTI," a "partial or fractional TTI," a "shortened subframe," a "short subframe," a "mini-slot," a "sub-slot," a "slot" and so on.

Note that a long TTI (for example, a normal TTI, a subframe, and so on) may be interpreted as a TTI having a time length exceeding 1 ms, and a short TTI (for example, a shortened TTI and so on) may be interpreted as a TTI having a TTI length shorter than the TTI length of a long TTI and equal to or longer than 1 ms.

A resource block (RB) is the unit of resource allocation in the time domain and the frequency domain, and may include one or a plurality of consecutive subcarriers in the frequency domain. The number of subcarriers included in an RB may be the same regardless of numerology, and, for example, may be 12. The number of subcarriers included in an RB may be determined based on numerology.

Also, an RB may include one or a plurality of symbols in the time domain, and may be one slot, one mini-slot, one subframe, or one TTI in length. One TTI, one subframe, and so on each may be constituted of one or a plurality of resource blocks.

Note that one or a plurality of RBs may be referred to as a "physical resource block (Physical RB (PRB))," a "sub-carrier group (SCG)," a "resource element group (REG),"a "PRB pair," an "RB pair" and so on.

Furthermore, a resource block may be constituted of one or a plurality of resource elements (REs). For example, one RE may correspond to a radio resource field of one subcarrier and one symbol.

A bandwidth part (BWP) (which may be referred to as a "fractional bandwidth," and so on) may represent a subset of contiguous common resource blocks (common RBs) for certain numerology in a certain carrier. Here, a common RB may be specified by an index of the RB based on the common reference point of the carrier. A PRB may be defined by a certain BWP and may be numbered in the BWP.

The BWP may include a UL BWP (BWP for the UL) and a DL BWP (BWP for the DL). One or a plurality of BWPs may be configured in one carrier for a UE.

At least one of configured BWPs may be active, and a UE does not need to assume to transmit/receive a certain signal/channel outside active BWPs. Note that a "cell," a "carrier," and so on in the present disclosure may be interpreted as a "BWP."

Note that the above-described structures of radio frames, subframes, slots, mini-slots, symbols, and so on are merely examples. For example, structures such as the number of subframes included in a radio frame, the number of slots per subframe or radio frame, the number of mini-slots included in a slot, the numbers of symbols and RBs included in a slot or a mini-slot, the number of subcarriers included in an RB, the number of symbols in a TTI, the symbol length, the cyclic prefix (CP) length, and so on can be variously changed.

Also, the information, parameters, and so on described in the present disclosure may be represented in absolute values or in relative values with respect to certain values, or may be represented in another corresponding information. For example, radio resources may be specified by certain indices.

The names used for parameters and so on in the present disclosure are in no respect limiting. Furthermore, mathematical expressions that use these parameters, and so on may be different from those expressly disclosed in the present disclosure. For example, since various channels (PUCCH, PDCCH, and so on) and information elements can be identified by any suitable names, the various names allocated to these various channels and information elements are in no respect limiting.

The information, signals, and so on described in the present disclosure may be represented by using any of a variety of different technologies. For example, data, instructions, commands, information, signals, bits, symbols, chips, and so on, all of which may be referenced throughout the herein-contained description, may be represented by voltages, currents, electromagnetic waves, magnetic fields or particles, optical fields or photons, or any combination of these.

Also, information, signals, and so on can be output in at least one of from higher layers to lower layers and from lower layers to higher layers. Information, signals, and so on may be input and/or output via a plurality of network nodes.

The information, signals, and so on that are input and/or output may be stored in a specific location (for example, a memory) or may be managed by using a management table. The information, signals, and so on to be input and/or output can be overwritten, updated, or appended. The information, signals, and so on that are output may be deleted. The information, signals, and so on that are input may be transmitted to another apparatus.

Notification of information is by no means limited to the aspects/embodiments described in the present disclosure, and other methods may be used as well. For example, notification of information in the present disclosure may be implemented by using physical layer signaling (for example, downlink control information (DCI), uplink control information (UCI)), higher layer signaling (for example, Radio Resource Control (RRC) signaling, broadcast information (master information block (MIB), system information blocks (SIBs), and so on), Medium Access Control (MAC) signaling), and other signals or combinations of these.

Note that physical layer signaling may be referred to as "Layer 1/Layer 2 (L1/L2) control information (L1/L2 control signals)," "L1 control information (L1 control signal)," and so on. Also, RRC signaling may be referred to as an "RRC message," and can be, for example, an RRC connection setup message, an RRC connection reconfiguration message, and so on. Also, MAC signaling may be notified using, for example, MAC control elements (MAC CEs).

Also, notification of certain information (for example, reporting of "being X") does not necessarily have to be notified explicitly, and can be notified implicitly (by, for example, not notifying this certain information or notifying another piece of information).

Determinations may be made in values represented by one bit (0 or 1), may be made in Boolean values that represent true or false, or may be made by comparing numerical values (for example, comparison against a certain value).

Software, whether referred to as "software," "firmware," "middleware," "microcode," or "hardware description language," or called by other terms, should be interpreted broadly to mean instructions, instruction sets, code, code segments, program codes, programs, subprograms, software modules, applications, software applications, software packages, routines, subroutines, objects, executable files, execution threads, procedures, functions, and so on.

Also, software, commands, information, and so on may be transmitted and received via communication media. For example, when software is transmitted from a website, a server, or other remote sources by using at least one of wired technologies (coaxial cables, optical fiber cables, twisted-pair cables, digital subscriber lines (DSL), and so on) and wireless technologies (infrared radiation, microwaves, and so on), at least one of these wired technologies and wireless technologies are also included in the definition of communication media.

The terms "system" and "network" used in the present disclosure can be used interchangeably. The "network" may mean an apparatus (for example, a base station) included in the network.

In the present disclosure, the terms such as "precoding," a "precoder," a "weight (precoding weight)," "quasi-co-location (QCL)," a "Transmission Configuration Indication state (TCI state)," a "spatial relation," a "spatial domain filter," a "transmit power," "phase rotation," an "antenna port," an "antenna port group," a "layer," "the number of layers," a "rank," a "resource," a "resource set," a "resource group," a "beam," a "beam width," a "beam angular degree," an "antenna," an "antenna element," a "panel," and so on can be used interchangeably.

In the present disclosure, the terms such as a "base station (BS)," a "radio base station," a "fixed station," a "NodeB," an "eNB (eNodeB)," a "gNB (gNodeB)," an "access point," a "transmission point (TP)," a "reception point (RP)," a "transmission/reception point (TRP)," a "panel," a "cell," a "sector," a "cell group," a "carrier," a "component carrier," and so on can be used interchangeably. The base station may be referred to as the terms such as a "macro cell," a small cell," a "femto cell," a "pico cell," and so on.

A base station can accommodate one or a plurality of (for example, three) cells. When a base station accommodates a plurality of cells, the entire coverage area of the base station can be partitioned into multiple smaller areas, and each smaller area can provide communication services through base station subsystems (for example, indoor small base stations (Remote Radio Heads (RRHs))). The term "cell" or "sector" refers to part of or the entire coverage area of at least one of a base station and a base station subsystem that provides communication services within this coverage.

In the present disclosure, the terms "mobile station (MS)," "user terminal," "user equipment (UE)," and "terminal" may be used interchangeably.

A mobile station may be referred to as a "subscriber station," "mobile unit," "subscriber unit," "wireless unit," "remote unit," "mobile device," "wireless device," "wireless communication device," "remote device," "mobile subscriber station," "access terminal," "mobile terminal," "wireless terminal," "remote terminal," "handset," "user agent," "mobile client," "client," or some other appropriate terms in some cases.

At least one of a base station and a mobile station may be referred to as a "transmitting apparatus," a "receiving apparatus," a "radio communication apparatus," and so on. Note that at least one of a base station and a mobile station may be a device mounted on a moving object or a moving object itself, and so on.

The moving object is a movable object with any moving speed, and naturally a case where the moving object is stopped is also included. Examples of the moving object include a vehicle, a transport vehicle, an automobile, a motorcycle, a bicycle, a connected car, a loading shovel, a bulldozer, a wheel loader, a dump truck, a fork lift, a train, a bus, a trolley, a rickshaw, a ship and other watercraft, an airplane, a rocket, a satellite, a drone, a multicopter, a quadcopter, a balloon, and an object mounted on any of these, but these are not restrictive. The moving object may be a moving object that autonomously travels based on a direction for moving.

The moving object may be a vehicle (for example, a car, an airplane, and the like), may be a moving object which moves unmanned (for example, a drone, an automatic operation car, and the like), or may be a robot (a manned type or unmanned type). Note that at least one of a base station and a mobile station also includes an apparatus which does not necessarily move during communication operation. For example, at least one of a base station and a mobile station may be an Internet of Things (IoT) device such as a sensor.

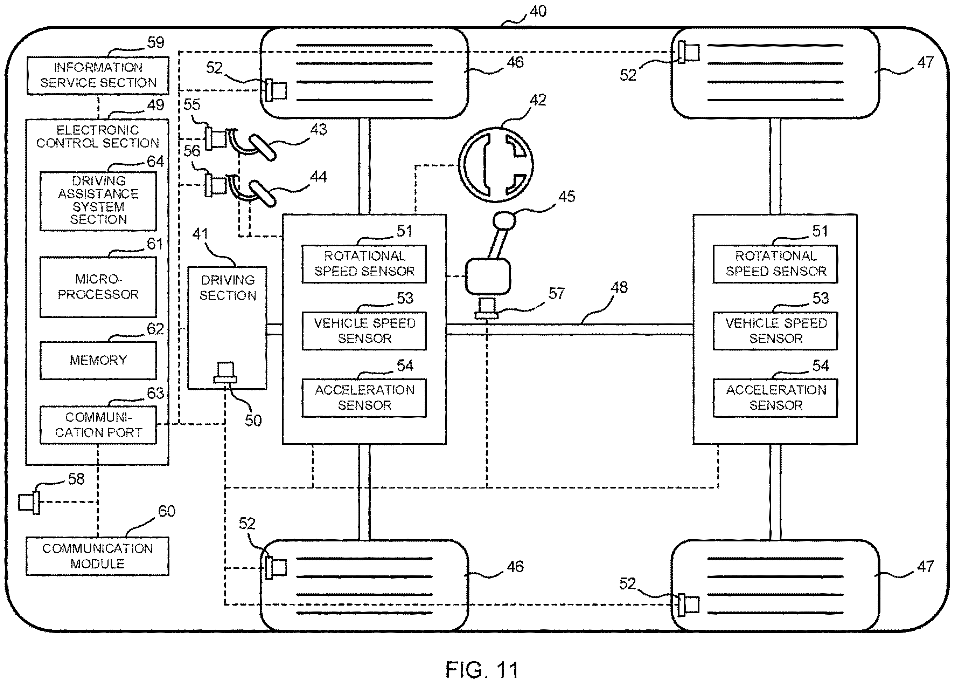

FIG. 11 is a diagram to show an example of a vehicle according to one embodiment. A vehicle 40 includes a driving section 41, a steering section 42, an accelerator pedal 43, a brake pedal 44, a shift lever 45, right and left front wheels 46, right and left rear wheels 47, an axle 48, an electronic control section 49, various sensors (including a current sensor 50, a rotational speed sensor 51, a pneumatic sensor 52, a vehicle speed sensor 53, an acceleration sensor 54, an accelerator pedal sensor 55, a brake pedal sensor 56, a shift lever sensor 57, and an object detection sensor 58), an information service section 59, and a communication module 60.

The driving section 41 includes, for example, at least one of an engine, a motor, and a hybrid of an engine and a motor. The steering section 42 at least includes a steering wheel, and is configured to steer at least one of the front wheels 46 and the rear wheels 47, based on operation of the steering wheel operated by a user.

The electronic control section 49 includes a microprocessor 61, a memory (ROM, RAM) 62, and a communication port (for example, an input/output (IO) port) 63. The electronic control section 49 receives, as input, signals from the various sensors 50 to 58 included in the vehicle. The electronic control section 49 may be referred to as an Electronic Control Unit (ECU).

Examples of the signals from the various sensors 50 to 58 include a current signal from the current sensor 50 for sensing current of a motor, a rotational speed signal of the front wheels 46/rear wheels 47 acquired by the rotational speed sensor 51, a pneumatic signal of the front wheels 46/rear wheels 47 acquired by the pneumatic sensor 52, a vehicle speed signal acquired by the vehicle speed sensor 53, an acceleration signal acquired by the acceleration sensor 54, a depressing amount signal of the accelerator pedal 43 acquired by the accelerator pedal sensor 55, a depressing amount signal of the brake pedal 44 acquired by the brake pedal sensor 56, an operation signal of the shift lever 45 acquired by the shift lever sensor 57, and a detection signal for detecting an obstruction, a vehicle, a pedestrian, and the like acquired by the object detection sensor 58.

The information service section 59 includes various devices for providing (outputting) various pieces of information such as drive information, traffic information, and entertainment information, such as a car navigation system, an audio system, a speaker, a display, a television, and a radio, and one or more ECUs that control these devices. The information service section 59 provides various pieces of information/services (for example, multimedia information/multimedia service) for an occupant of the vehicle 40, using information acquired from an external apparatus via the communication module 60 and the like.

The information service section 59 may include an input device (for example, a keyboard, a mouse, a microphone, a switch, a button, a sensor, a touch panel, and the like) for receiving input from the outside, or may include an output device (for example, a display, a speaker, an LED lamp, a touch panel, and the like) for implementing output to the outside.

A driving assistance system section 64 includes various devices for providing functions for preventing an accident and reducing a driver's driving load, such as a millimeter wave radar, Light Detection and Ranging (LiDAR), a camera, a positioning locator (for example, a Global Navigation Satellite System (GNSS) and the like), map information (for example, a high definition (HD) map, an autonomous vehicle (AV) map, and the like), a gyro system (for example, an inertial measurement apparatus (inertial measurement unit (IMU)), an inertial navigation apparatus (inertial navigation system (INS)), and the like), an artificial intelligence (AI) chip, and an AI processor, and one or more ECUs that control these devices. The driving assistance system section 64 transmits and receives various pieces of information via the communication module 60, and implements a driving assistance function or an autonomous driving function.

The communication module 60 can communicate with the microprocessor 61 and the constituent elements of the vehicle 40 via the communication port 63. For example, via the communication port 63, the communication module 60 transmits and receives data (information) to and from the driving section 41, the steering section 42, the accelerator pedal 43, the brake pedal 44, the shift lever 45, the right and left front wheels 46, the right and left rear wheels 47, the axle 48, the microprocessor 61 and the memory (ROM, RAM) 62 in the electronic control section 49, and the various sensors 50 to 58, which are included in the vehicle 40.

The communication module 60 can be controlled by the microprocessor 61 of the electronic control section 49, and is a communication device that can perform communication with an external apparatus. For example, the communication module 60 performs transmission and reception of various pieces of information to and from the external apparatus via radio communication. The communication module 60 may be either inside or outside the electronic control section 49. The external apparatus may be, for example, the base station 10, the user terminal 20, or the like described above. The communication module 60 may be, for example, at least one of the base station 10 and the user terminal 20 described above (may function as at least one of the base station 10 and the user terminal 20).

The communication module 60 may transmit at least one of signals from the various sensors 50 to 58 described above input to the electronic control section 49, information obtained based on the signals, and information based on an input from the outside (a user) obtained via the information service section 59, to the external apparatus via radio communication. The electronic control section 49, the various sensors 50 to 58, the information service section 59, and the like may be referred to as input sections that receive input. For example, the PUSCH transmitted by the communication module 60 may include information based on the input.

The communication module 60 receives various pieces of information (traffic information, signal information, inter-vehicle distance information, and the like) transmitted from the external apparatus, and displays the various pieces of information on the information service section 59 included in the vehicle. The information service section 59 may be referred to as an output section that outputs information (for example, outputs information to devices, such as a display and a speaker, based on the PDSCH received by the communication module 60 (or data/information decoded from the PDSCH)).

The communication module 60 stores the various pieces of information received from the external apparatus in the memory 62 that can be used by the microprocessor 61. Based on the pieces of information stored in the memory 62, the microprocessor 61 may perform control of the driving section 41, the steering section 42, the accelerator pedal 43, the brake pedal 44, the shift lever 45, the right and left front wheels 46, the right and left rear wheels 47, the axle 48, the various sensors 50 to 58, and the like included in the vehicle 40.

Furthermore, the base station in the present disclosure may be interpreted as a user terminal. For example, each aspect/embodiment of the present disclosure may be applied to the structure that replaces a communication between a base station and a user terminal with a communication between a plurality of user terminals (for example, which may be referred to as "Device-to-Device (D2D)," "Vehicle-to-Everything (V2X)," and the like). In this case, user terminals 20 may have the functions of the base stations 10 described above. The words such as "uplink" and "downlink" may be interpreted as the words corresponding to the terminal-to-terminal communication (for example, "sidelink"). For example, an uplink channel, a downlink channel, and so on may be interpreted as a sidelink channel.

Likewise, the user terminal in the present disclosure may be interpreted as base station. In this case, the base station 10 may have the functions of the user terminal 20 described above.

Operations which have been described in the present disclosure to be performed by a base station may, in some cases, be performed by an upper node of the base station. In a network including one or a plurality of network nodes with base stations, it is clear that various operations that are performed to communicate with terminals can be performed by base stations, one or more network nodes (for example, Mobility Management Entities (MMEs), Serving-Gateways (S-GWs), and so on may be possible, but these are not limiting) other than base stations, or combinations of these.

The aspects/embodiments illustrated in the present disclosure may be used individually or in combinations, which may be switched depending on the mode of implementation. The order of processes, sequences, flowcharts, and so on that have been used to describe the aspects/embodiments in the present disclosure may be re-ordered as long as inconsistencies do not arise. For example, although various methods have been illustrated in the present disclosure with various components of steps in exemplary orders, the specific orders that are illustrated herein are by no means limiting.

The aspects/embodiments illustrated in the present disclosure may be applied to Long Term Evolution (LTE), LTE-Advanced (LTE-A), LTE-Beyond (LTE-B), SUPER 3G, IMT-Advanced, 4th generation mobile communication system (4G), 5th generation mobile communication system (5G), 6th generation mobile communication system (6G), xth generation mobile communication system (xG (where x is, for example, an integer or a decimal)), Future Radio Access (FRA), New-Radio Access Technology (RAT), New Radio (NR), New radio access (NX), Future generation radio access (FX), Global System for Mobile communications (GSM (registered trademark)), CDMA 2000, Ultra Mobile Broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), systems that use other adequate radio communication methods, next-generation systems that are enhanced, modified, created, or defined based on these, and the like. A plurality of systems may be combined (for example, a combination of LTE or LTE-A and 5G, and the like) and applied.

The phrase "based on" (or "on the basis of") as used in the present disclosure does not mean "based only on" (or "only on the basis of"), unless otherwise specified. In other words, the phrase "based on" (or "on the basis of") means both "based only on" and "based at least on" ("only on the basis of" and "at least on the basis of").

Reference to elements with designations such as "first," "second," and so on as used in the present disclosure does not generally limit the quantity or order of these elements. These designations may be used in the present disclosure only for convenience, as a method for distinguishing between two or more elements. Thus, reference to the first and second elements does not imply that only two elements may be employed, or that the first element must precede the second element in some way.

The term "judging (determining)" as in the present disclosure herein may encompass a wide variety of operations. For example, "judging (determining)" may be interpreted to mean making "judgments (determinations)" about judging, calculating, computing, processing, deriving, investigating, looking up, search and inquiry (for example, searching a table, a database, or some other data structures), ascertaining, and so on.

Furthermore, "judging (determining)" may be interpreted to mean making "judgments (determinations)" about receiving (for example, receiving information), transmitting (for example, transmitting information), input, output, accessing (for example, accessing data in a memory), and so on.

In addition, "judging (determining)" as used herein may be interpreted to mean making "judgments (determinations)" about resolving, selecting, choosing, establishing, comparing, and so on. In other words, "judging (determining)" may be interpreted to mean making "judgments (determinations)" about some operation.

In addition, "judging (determining)" may be interpreted as "assuming," "expecting," "considering," and the like.

The terms "connected" and "coupled," or any variation of these terms as used in the present disclosure mean all direct or indirect connections or coupling between two or more elements, and may include the presence of one or more intermediate elements between two elements that are "connected" or "coupled" to each other. The coupling or connection between the elements may be physical, logical, or a combination thereof. For example, "connection" may be interpreted as "access."

In the present disclosure, when two elements are connected, the two elements may be considered "connected" or "coupled" to each other by using one or more electrical wires, cables and printed electrical connections, and, as some non-limiting and non-inclusive examples, by using electromagnetic energy having wavelengths in radio frequency regions, microwave regions, (both visible and invisible) optical regions, or the like.

In the present disclosure, the phrase "A and B are different" may mean that "A and B are different from each other." Note that the phrase may mean that "A and B are each different from C." The terms "separate," "be coupled," and so on may be interpreted similarly to "different."

When terms such as "include," "including," and variations of these are used in the present disclosure, these terms are intended to be inclusive, in a manner similar to the way the term "comprising" is used. Furthermore, the term "or" as used in the present disclosure is intended to be not an exclusive disjunction.

For example, in the present disclosure, when an article such as "a," "an," and "the" in the English language is added by translation, the present disclosure may include that a noun after these articles is in a plural form.

Now, although the invention according to the present disclosure has been described in detail above, it should be obvious to a person skilled in the art that the invention according to the present disclosure is by no means limited to the embodiments described in the present disclosure. The invention according to the present disclosure can be implemented with various corrections and in various modifications, without departing from the spirit and scope of the invention defined by the recitations of claims. Consequently, the description of the present disclosure is provided only for the purpose of explaining examples, and should by no means be construed to limit the invention according to the present disclosure in any way.

## Claims

1. A terminal comprising:
a receiving section that receives configuration information of a random access channel (RACH) associated with a Public Land Mobile Network (PLMN) ID, the configuration information being included in a system information block (SIB); and
a control section that controls, based on the configuration information of the RACH, a random access procedure associated with the PLMN ID.

2. The terminal according to claim 1, wherein
the configuration information of the RACH is included in information related to an initial uplink bandwidth part, and
the information related to the initial uplink bandwidth part includes the PLMN ID.

3. The terminal according to claim 1, wherein
the configuration information of the RACH includes the PLMN ID and at least one of information related to a time resource and a format configuration for a physical random access channel (PRACH), information related to a start position of a frequency resource for the PRACH, and information related to a sequence of the PRACH.

4. The terminal according to claim 1, wherein
the control section reports the PLMN ID of the terminal by using the RACH.

5. A radio communication method for a terminal, the radio communication method comprising:
receiving configuration information of a random access channel (RACH) associated with a Public Land Mobile Network (PLMN) ID, the configuration information being included in a system information block (SIB); and
controlling, based on the configuration information of the RACH, a random access procedure associated with the PLMN ID.

6. A base station comprising:
a transmitting section that transmits configuration information of a random access channel (RACH) associated with a Public Land Mobile Network (PLMN) ID, the configuration information being included in a system information block (SIB); and
a control section that controls, using the configuration information of the RACH, a random access procedure associated with the PLMN ID.
